(19) Europäisches Patentamt
European Patent Office
Office européen des brevets

(11) EP 0 933 889 A1

(12) EUROPEAN PATENT APPLICATION

(43) Date of publication:
04.08.1999 Bulletin 1999/31

(51) Int. Cl.$^6$: H04B 14/04

(21) Application number: 99101205.5

(22) Date of filing: 22.01.1999

(84) Designated Contracting States:
AT BE CH CY DE DK ES FI FR GB GR IE IT LI LU
MC NL PT SE
Designated Extension States:
AL LT LV MK RO SI

(30) Priority: 29.01.1998 JP 1662798

(71) Applicant:
Olympus Optical Co., Ltd.
Tokyo (JP)

(72) Inventor:
Imade, Shinichi
c/o Olympus Optical Co., Ltd.
Hachioji-shi, Tokyo (JP)

(74) Representative:
R.A. KUHNEN & P.A. WACKER
Patentanwaltsgesellschaft mbH
Alois-Steinecker-Strasse 22
85354 Freising (DE)

(54) **Digital sound signal transmitting apparatus and receiving apparatus**

(57) A transmitting apparatus (1) has a band adaptive type input data converting section (12) and a compression encoding section (13). The band adaptive type input data converting section (12) includes a frequency band setting section for setting a frequency band for a to-be-transmitted digital sound signal, and determining a cut-off frequency and a re-sampling frequency for the digital sound signal on the basis of the set frequency band, an adaptive anti-aliasing filter for adaptively filtering the to-be-transmitted digital sound signal on the basis of the cut-off frequency, and a re-sampling section for re-sampling the digital sound signal having passed through the adaptive anti-aliasing filter, using the re-sampling frequency. The compression encoding section (13) performs compression encoding on the re-sampled digital sound signal in units of a predetermined number of data samples, thereby creating encoded data.

FIG. 1

**Description**

This invention relates to a digital sound signal transmitting apparatus for performing compression encoding on a digitized sound signal, and then transmitting the resultant encoded data via a predetermined medium, and a digital sound signal receiving apparatus for receiving data including the encoded data output from the transmitting apparatus, and then performing decompression decoding corresponding to the compression encoding.

There are known various types of conventional digital sound signal transmitting apparatuses and receiving apparatuses. These digital sound signal transmitting apparatuses and receiving apparatuses include magnetic recording/reproducing apparatuses, data transmitting/receiving apparatuses, encoded-image recording apparatuses capable of recording data, by printing, on a printing/recording medium in the form of an optically readable encoded image, and reading apparatuses for reading the recorded data. Those apparatuses employ various types of compression encoding methods to save the amount of data to be transmitted and received or to realize high speed transmission.

In many cases where such compression encoding methods are employed, to secure desired reproduction quality for a sound when it is received, a sound band corresponding to the reproduction quality is set for the sound and compression encoding of a high compression ratio and high quality is performed on the sound before transmitting it.

Accordingly, the band of the to-be-transmitted sound is actually fixed. To obtain a higher compression ratio with the reproduction band of the sound secured, it is necessary to slightly sacrifice the number of bits to be quantized during digitization or the S/N ratio, and a compression encoding method for this purpose is being contrived.

It is a well known matter in the digital data compression encoding that to obtain both a high quality and a high compression ratio is difficult and they have a trade-off relationship.

In light of this, Japanese Patent Application KOKAI Publication No. 61-43796, for example, proposes a single apparatus equipped with a plurality of compression encoding means for performing different compression encoding processes. In this apparatus, an optimal one is selected from the plurality of compression encoding means in accordance with the type of a sound or a request from the user, in order to transmit and receive digitised sound signals.

However, the proposed apparatus, which employs the plural compression encoding means, is inevitably large and expensive, and therefore leaves much to be improved.

Further, Japanese Patent Application KOKAI Publication No. 5-335968, for example, proposes an apparatus, in which a clock signal is directly extracted from to-be-transmitted digital data, the frequency of the extracted clock signal is converted into a low sampling frequency, the digital data is encoded on the basis of the converted sampling frequency, and the resultant encoded data is transmitted. This publication, however, does not refer to the number of data samples for encoding by the encoding means.

The invention has been developed under the above-described circumstances, and is aimed at providing a digital sound signal transmitting apparatus and receiving apparatus which each employ only a single compression encoding means but can enhance either the quality of to-be-transmitted and to-be-received digital sound signals, or the compression ratios of them in accordance with the purpose, and wherein an increase in size and manufacturing cost is minimized.

According to an aspect of the present invention, there is provided a digital sound signal transmitting apparatus for compression encoding a digitized sound signal into encoded data, and transmitting the encoded data via a predetermined medium, comprising:

a frequency band setting unit for setting a frequency band for a to-be-transmitted digital sound signal, and determining a cut-off frequency and a re-sampling frequency for the digital sound signal on the basis of the set frequency band;
an adaptive band limiting filter for adaptively filtering the to-be-transmitted digital sound signal on the basis of the cut-off frequency determined by the frequency band setting unit;
a re-sampling unit for re-sampling the digital sound signal having passed through the adaptive band limiting filter, using the re-sampling frequency determined by the frequency band setting unit; and
a compression encoding unit for compression encoding the digital sound signal re-sampled by the re-sampling unit, in units of a predetermined number of data samples, thereby creating encoded data.

According to another aspect of the present invention, there is provided a digital sound signal receiving apparatus for receiving data which contains encoded data transmitted from a digital sound signal transmitting apparatus including: a frequency band setting unit for setting a frequency band for a to-be-transmitted digital sound signal, and determining a cut-off frequency and a re-sampling frequency for the digital sound signal on the basis of the set frequency band; an adaptive band limiting filter for adaptively filtering the to-be-transmitted digital sound signal on the basis of the cut-off frequency determined by the frequency band setting unit; a re-sampling unit for re-sampling the digital sound signal having passed through the adaptive band limiting filter, using the re-sampling frequency determined by the frequency band setting unit; and a compression encoding unit for compression encoding the digital sound signal re-sampled by the re-sampling unit, in units of a predetermined number of data samples, thereby creating encoded data,

the receiving apparatus comprising:
an input designating unit for designating input of the cut-off frequency and/or the re-sampling frequency determined by the frequency band setting unit; and
a decompression decoding unit for performing decompression decoding corresponding to the compression encoding on the basis of the cut-off frequency and/or the re-sampling frequency designated by the input designating unit.

This summary of the invention does not necessarily describe all necessary features so that the invention may also be a sub-combination of these described features.

The invention can be more fully under stood from the following detailed description when taken in conjunction with the accompanying drawings, in which:

FIG. 1 is a block diagram illustrating a digital sound signal transmitting apparatus and receiving apparatus according to a first embodiment of the invention;
FIG. 2 is a block diagram illustrating a sound input processing section appearing in FIG. 1;
FIG. 3 is a block diagram illustrating a band adaptive type input data converting section appearing in FIG. 1;
FIG. 4 is a view useful in explaining an adaptive anti-aliasing filter;
FIG. 5 is a block diagram showing a major component band detecting section appearing in FIG. 3;
FIG. 6 is a view useful in explaining the output of the major component band detecting section;
FIG. 7 is a block diagram of an appropriate band determining/selecting section appearing in FIG. 3;
FIG. 8 is a view useful in explaining an appropriate band determining zone set in units of a single encoded sound data item;
FIG. 9 is a view, showing a cut-off frequency/re-sampling frequency setting table provided in a cut-off frequency and re-sampling frequency setting section in FIG. 7;
FIG. 10 is a view illustrating the relationship between the input sound waveform and the encoding frame after adaptive band conversion, and useful in explaining the operation of a re-sampling converting section in FIG. 3;
FIG. 11 is a block diagram of a sound compression encoding section in FIG. 1;
FIG. 12 is a view illustrating the data structure of an encoded sound file;
FIG. 13 is a view illustrating a dot code pattern format used when recording/printing an encoded sound file on a sheet of paper as a recording/transmitting medium;
FIG. 14 is a view showing the structure of a block incorporated in the dot code pattern in FIG. 13;
FIG. 15 is a block diagram showing a compressed-sound-data decoding section in FIG. 1;
FIG. 16 is a block diagram showing a band adaptive type output data converting section in FIG. 1;
FIG. 17 is a block diagram showing a sound output processing section in FIG. 1;
FIG. 18 is a block diagram illustrating an appropriate band determining/selecting section incorporated in a third embodiment of the invention;
FIG. 19 is a block diagram illustrating a digital sound signal transmitting apparatus and receiving apparatus according to a fourth embodiment of the invention;
FIG. 20 is a view showing a table sheet indicative of the relationship between a to-be-recorded sound and a cut-off frequency $f_w$, which are used in the fourth embodiment;
FIG. 21 is a block diagram illustrating a digital sound signal transmitting apparatus and receiving apparatus according to a fifth embodiment of the invention;
FIG. 22 is a block diagram illustrating a sound input processing section in FIG. 21;
FIG. 23 is a block diagram illustrating a band adaptive type input data emphasizing/converting section;
FIG. 24 is a view of a table showing conditions for setting a band emphasizing anti-aliasing filter in FIG. 23; and
FIG. 25 is a view useful in explaining the operation of the band emphasizing anti-aliasing filter.

The embodiments of the invention will be described with reference to the accompanying drawing.

[First Embodiment]

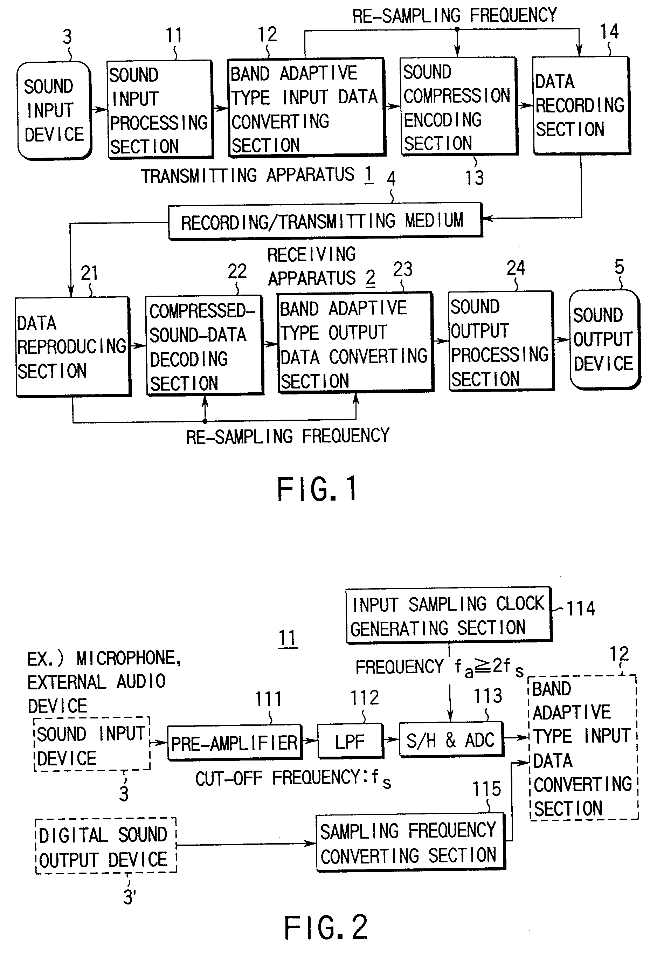

FIG. 1 shows a digital sound signal transmitting apparatus 1 and receiving apparatus 2 according to a first embodiment of the invention. The transmitting apparatus 1 comprises a sound input processing section 11, a band adaptive type input data converting section 12, a sound compression encoding section 13 and a data recording section 14. The receiving apparatus 2 comprises a data reproducing section 21, a compressed-sound-data decoding section 22, a band adaptive type output data converting section 23 and a sound output processing section 24.

In the transmitting apparatus 1, a sound signal from a sound input device 3 such as a microphone, an external audio machine, etc. is input to the sound input processing section 11, where the signal is digitized. The digitized sound data is input to the band adaptive type input data converting section 12, where the band component of the input sound data is analyzed, i.e. it is analyzed which band component is contained in the input sound data, thereby determining a re-sampling frequency on the basis of the analysis result and re-sampling the input sound data using the re-sampling frequency. The re-sampling frequency is also sent to the sound compression encoding section 13 and the data recording section 14, which are located downstream of the section 12. The re-sampled sound data is input to the sound compression encoding section 13, where it is subjected to compression encoding in units of a predetermined number of data samples. The compression-encoded sound data is input to the data recording section 14, where it is recorded on a recording/transmitting medium 4. When the encoded sound data is recorded, the re-sampling frequency, for example, is additionally recorded as a header.

In the receiving apparatus 2, a data reproducing section 21 reproduces the encoded sound data recorded on the recording/transmitting medium 4, and extracts the re-sampling frequency from the header. The extracted re-sampling frequency is input to the compressed-sound-data decoding section 22 and the band adaptive type output data converting section 23, which are located downstream of the section 21. The reproduced encoded sound data is input to the compressed-sound-data decoding section 22. In the compressed-sound-data decoding section 22, the input encoded sound data is decoded by decompression. The decoded data is input to the band adaptive type output data converting section 23, where necessary up-sampling is performed on the basis of the re-sampling frequency, thereby supplying the resultant sound data to the sound output processing section 24. The sound output processing section 24 subjects the input sound data to D/A conversion, filtering or amplification, and outputs a sound corresponding to the input sound data through a sound output device 5 such as a speaker, an earphone, a headphone, etc.

As shown in FIG. 2, the sound input processing section 11 is constituted of, for example, a pre-amplifier 111, an LPF 112, a sample and hold and A/D converter (hereinafter referred to as an "S/H & ADC") 113, an input sampling clock generating section 114 and a sampling frequency converting section 115.

An analog sound signal input through the sound input device 3 is amplified by the pre-amplifier 111. Then, the frequency component of the amplified signal, which is not less than a cut-off frequency $f_s$, is cut off by the LPF 112, and the resultant signal is input to the S/H & ADC 113. The S/H & ADC 113 is supplied with a sampling clock signal from the input sampling clock generating section 114. The S/H & ADC 113 samples an analog sound signal from the LPF 112 on the basis of the sampling clock signal, and converts the sampling result to a digital value. The thus-obtained digital sound data is supplied to the band adaptive type input data converting section 12.

The frequency $f_a$ of the sampling clock signal supplied from the input sampling clock generating section 114 is set at a value not less than twice the cut-off frequency $f_s$ used in the LPF 112 in order to satisfy the Nyquist's sampling theorem. The cut-off frequency $f_s$ of the LPF 112 is pre-set as the maximum frequency of a maximum guarantee band which should be secured by the transmitting apparatus 1. In the case of a transmitting apparatus whose target frequency band is, for example, 8 kHz, 4 kHz or 2 kHz, the cut-off frequency $f_s$ of 8 kHz. Accordingly, the sampling clock frequency $f_a$ is set at 16 kHz or more.

Further, where digital sound data is directly supplied from a digital sound output device 3', as well as an analog sound signal from the sound input device 3, the sampling frequency converting section 115 converts the sampling frequency to a value corresponding to the transmitting apparatus 1, and supplies the converted value to the band adaptive type input data converting section 12. In other words, sampling frequency conversion is performed when necessary since there are digital sound output devices 3' in which a rather high sampling frequency is set.

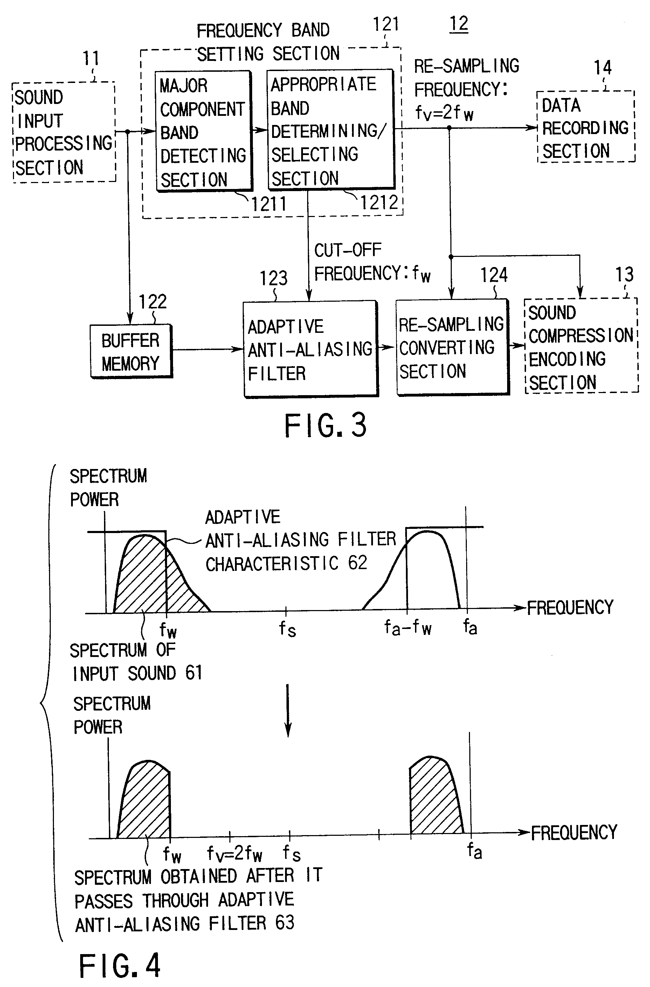

The band adaptive type input data converting section 12 supplied with digital sound data from the S/H & ADC 113 and the sampling frequency converting section 115 comprises, as shown in, for example, FIG. 3, a frequency band setting section 121, a buffer memory 122, an adaptive anti-aliasing filter 123 and a re-sampling converting section 124.

Digital sound data from the S/H & ADC 113 and the sampling frequency converting section 115 of the sound input processing section 11 is supplied to and stored in the buffer memory 122 and also input to the frequency band setting section 121. The frequency band setting section 121 includes a major component band detecting section 1211 and an appropriate band determining/selecting section 1212. The input digital sound data is supplied to the major component band detecting section 1211, where its major frequency band is detected, i.e. it is detected in which band the greatest number of frequency components exist, as will be described later in detail. The appropriate band determining/selecting section 1212 determines an appropriate band on the basis of the detection result, and sets a cut-off frequency $f_w$ and a re-sampling frequency $f_v$.

The cut-off frequency $f_w$ is obtained by multiplying, by an integer, a re-sampling basic frequency $f_0$ which is 1/n (n: integer) of the aforementioned maximum frequency $f_s$ of the maximum guarantee band. The appropriate band determining/selecting section 1212 stores a plurality of candidate values for the cut-off frequency obtained by multiplying, by an integer, the re-sampling basic frequency $f_0$, and sets one of the candidate values as the cut-off frequency $f_w$ on the basis of the detection result of the major component band detecting section 1211.

In the case where, for example, the maximum frequency of the maximum guarantee band is 8 kHz, and the re-

sampling basic frequency $f_0$ is 2 kHz which is 1/4 of 8 kHz, the appropriate band determining/selecting section 1212 stores cut-off frequency candidates of 2 kHz, 4 kHz, 6 kHz and 8 kHz. If the major component band detecting section 1211 detects that the band up to 4 kHz is the major band of the input digital sound data, and that almost no major frequency components exist in a frequency band higher than that, i.e. between 4 kHz and 8 kHz, the appropriate band determining/selecting section 1212 determines that the band up to 4 kHz is an appropriate one, and sets the cut-off frequency $f_w$ at 4 kHz.

Although the re-sampling frequency $f_v$ should be twice or more the cut-off frequency $f_w$, it is set at twice in this embodiment to minimize the amount of data processed in such an intermediate processing stage as above.

The set cut-off frequency $f_w$ and re-sampling frequency $f_v$ are input to the adaptive anti-aliasing filter 123 and the re-sampling converting section 124, respectively. Moreover, as described above, the re-sampling frequency $f_v$ is input to the data recording section 14 and written into the header section of data. This frequency $f_v$ is also input to the sound compression encoding section 13 and used to generate a timing signal corresponding to a process unit for sound compression encoding performed in a real-time manner.

After the cut-off frequency $f_w$ and re-sampling frequency $f_v$ are set, the digital sound data stored in the buffer memory 122 is input to the adaptive anti-aliasing filter 123, thereby filtering the data using the cut-off frequency $f_w$ so as to prevent reflected noise. More specifically, as shown in the upper portion of FIG. 4, the spectrum 61 of an input sound is filtered by a filter which has an adaptive anti-aliasing filter characteristic 62 determined based on the cut-off frequency $f_w$, thereby obtaining sound data with a spectrum 63 as shown in the lower portion of FIG. 4.

The sound data having passed through the adaptive anti-aliasing filter 123 is input to the re-sampling converting section 124, whereby it is again re-sampled using the re-sampling frequency $f_v$. The re-sampled data is supplied to the sound compression encoding section 13.

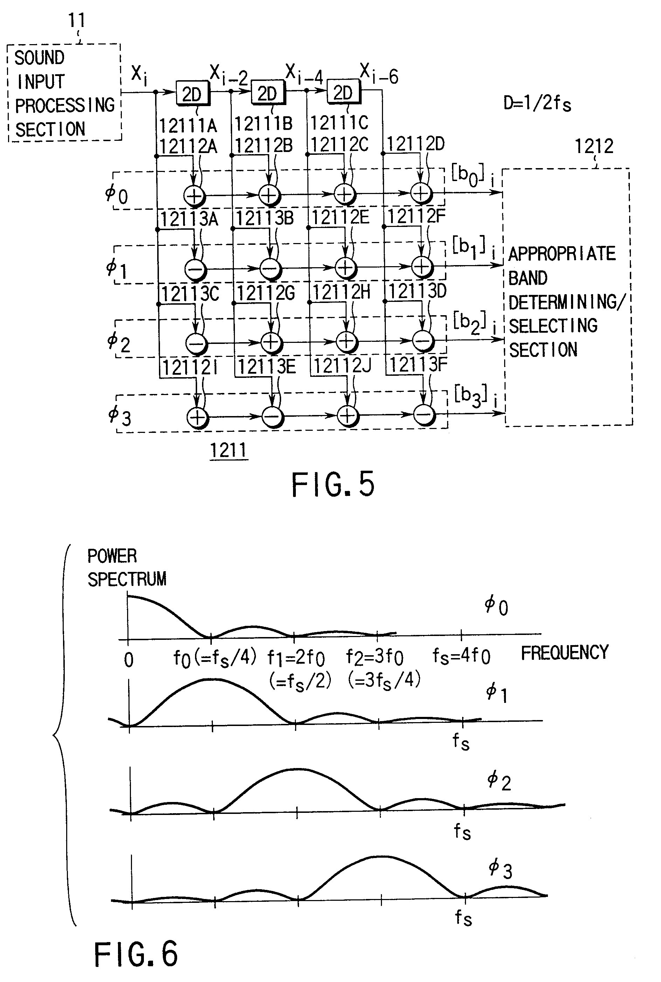

The major component band detecting section 1211 can be formed of, for example, three delay elements 12111A - 12111C, ten adders 12112A - 12112J and six subtracters 12113A - 12113F, as is shown in FIG. 5.

Each of the delay elements 12111A - 12111C delays the input data by 2D (D = $1/2 f_s$). Accordingly, the delay elements 12111A - 12111C provide $X_{i-2}$, $X_{i-4}$ and $X_{i-6}$ which are obtained by delaying elements in a sound data string $X_i$ by 2D, 4D and 6D, respectively.

The ten adders 12112A - 12112J and the six 12113A - 12113F are constructed to perform the following matrix calculation (4 × 4 Hadamard transform):

$$
\begin{bmatrix} b_0 \\ b_1 \\ b_2 \\ b_3 \end{bmatrix} = \begin{bmatrix} 1 & 1 & 1 & 1 \\ -1 & -1 & 1 & 1 \\ -1 & 1 & 1 & -1 \\ 1 & -1 & 1 & -1 \end{bmatrix} \begin{bmatrix} x_i \\ x_{i-2} \\ x_{i-4} \\ x_{i-6} \end{bmatrix}
$$

At the stage of $\phi_0$, $X_i$ from the sound input processing section 11, $X_{i-2}$ from the delay element 12111A, $X_{i-4}$ from the delay element 12111B and $X_{i-6}$ from the delay element 12111C are multiplied by +1, +1, +1 and +1, respectively, and then added to each other, using the four adders 12112A - 12112D. Similarly, at the stage of $\phi_1$, $X_i$, $X_{i-2}$, $X_{i-4}$ and $X_{i-6}$ are multiplied by -1, -1, +1 and +1, respectively, and then added to each other, using the subtracters 12113A and 12113B and the adders 12112E and 12112F. At the stage of $\phi_2$, $X_i$, $X_{i-2}$, $X_{i-4}$ and $X_{i-6}$ are multiplied by -1, +1, +1 and -1, respectively, and then added to each other, using the subtracter 12113C, the adders 12112G and 12112H and the subtracter 12113D. At the stage of $\phi_3$, $X_i$, $X_{i-2}$, $X_{i-4}$ and $X_{i-6}$ are multiplied by +1, -1, +1 and -1, respectively, and then added to each other, using the adder 12112I, the subtracter 12113E, the adder 12112J and the subtracter 12113F.

The thus sequentially obtained real-time outputs $[b_0]_i$ - $[b_3]_i$ of the stages $\phi_0$ - $\phi_3$ are supplied to the appropriate band determining/selecting section 1212.

The outputs $[b_0]_i$ - $[b_3]_i$ of the stages $\phi_0$ - $\phi_3$ indicate frequency components contained in bands, as is shown in FIG. 6. Specifically, supposing that the above coefficient +1 indicates a signal wave at the stage $\phi_0$, its power spectrum has bands as shown in the uppermost portion of FIG. 6. In other words, the output $[b_0]_i$ of the $\phi_0$ stage indicates a frequency component amount which the band 0 - $f_0$ (= $f_s/4$) mainly contains. Similarly, the output $[b_1]_i$ of the $\phi_1$ stage indicates a major frequency component amount in the band $f_0$ - $f_1$ (= $2f_0 = f_s/2$), the output $[b_2]_i$ of the $\phi_2$ stage a major frequency component amount in the band $f_1$ - $f_2$ (= $3f_0 = 3f_s/4$), and the output $[b_3]_i$ of the $\phi_3$ stage a major frequency component amount in the band $f_2$ - $f_s$ (= $4f_0$).

The major component band detecting section 1211 is not limited to a structure as described above for performing Hadamard transform, but may have any structure which realizes orthogonal transform suitable for frequency analysis, such as discrete Fourier transform, discrete cosine transform, etc.

Also, the appropriate band determining/selecting section 1212 which receives the outputs $[b_0]_i$ - $[b_3]_i$ of the major component band detecting section 1211 comprises three adders 12121A - 12121C, four normalizing sections 12122A - 12122D, three subtracters 12123A - 12123C, three summing-up sections 12124A - 12124C, a maximum value detecting section 12125 and a cut-off frequency and re-sampling frequency setting section 12126.

The three adders 12121A - 12121C add up the outputs $[b_0]_i$ - $[b_3]_i$ which indicate the above component amounts in the divided bands, and supply the sum as $\underline{b}$ to the four normalizing sections 12122A - 12122D. Further, $[b_0]_i$ - $[b_3]_i$ are input to the normalizing sections 12122A - 12122D, respectively. The normalizing sections 12122A - 12122D then divide the supplied $[b_0]_i$ - $[b_3]_i$ by the addition result $\underline{b}$, and obtain the absolute values of the division results. In other words, the ratio of the component amount of each divided band to that of the entire band is obtained.

The difference between the outputs of each adjacent pair of the normalizing sections 12122A - 12122D corresponding to adjacent bands is calculated using the three subtracters 12123A - 12123C. The outputs $[c_1]_i$ - $[c_3]_i$ of the subtracters 12123A - 12123C are supplied to the summing-up sections 12124A - 12124C, respectively. $c_1$ - $c_3$ are sequentially output in units of one sampling operation, and added up by the summing-up sections 12124A - 12124C. In this case, i assumes a value falling within a range of from jL to $\{i + (L - 1)\}$, where j represents any integer falling within a range of from 0 to a value which is obtained by dividing, by L, the total number of input sound samples during sampling using the frequency $f_a$ (L: the number of samples expressed by $t_0/(1/f_a)$). Further, $t_0$ is expressed by $N(1/2f_0)$ (N: the number of process unit samples in each compression-encoding frame).

More specifically, the number N of process unit samples in each compression-encoding frame is an automatically determined value, such as 240 samples, after compression encoding algorithm is determined. After the sample number N is determined, the process time required for each frame varies. In other words, since the number of data items is constant and the sampling frequency varies, the unit process time varies A unit process time $t_0$ at the minimum sampling frequency $f_0$ of the guarantee band is obtained by multiplying a sample number N, e.g. 240, by a cycle (= $1/2f_0$). Similarly, a unit process time $t_s$ at the maximum sampling frequency $f_s$ of the guarantee band is $N(1/2f_s)$.

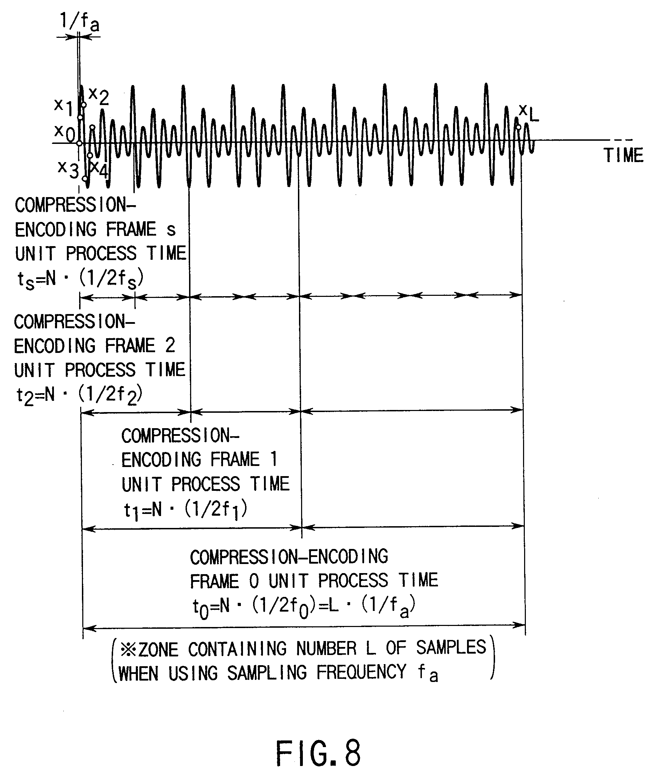

The unit process time varies depending upon the band as shown in FIG. 8. The frequency component is determined on the basis of a longest unit process time. Specifically, bands included within a unit process time required in each compression-encoding frame are detected, and an appropriate re-sampling frequency and cut-off frequency are determined on the basis of the detection result. Since, however, the unit process time in each compression-encoding frame is determined for the first time after the re-sampling frequency and cut-off frequency are determined, it is necessary to set a temporal unit process time to perform such processing. In this embodiment, the longest unit process time $t_0$ is set as a time zone for determining the frequency component.

Supposing that the maximum sampling frequency $f_s$ of the guarantee band, the re-sampling basic frequency $f_0$ and the value N (samples in each compression-encoding frame) are set at 8 kHz, 2 kHz and 240, respectively, the following values are obtained:

$$t_s = N((1/2)f_s) = 240(1/2 \times 8000) = 0.015 = 15(msec.)$$

$$t_2 = N((1/2)f_2) = 240(1/2 \times 6000) = 0.02 = 20(msec.)$$

$$t_1 = N((1/2)f_1) = 240(1/2 \times 4000) = 0.03 = 30(msec.)$$

$$t_0 = N((1/2)f_0) = 240(1/2 \times 2000) = 0.06 = 60(msec.)$$

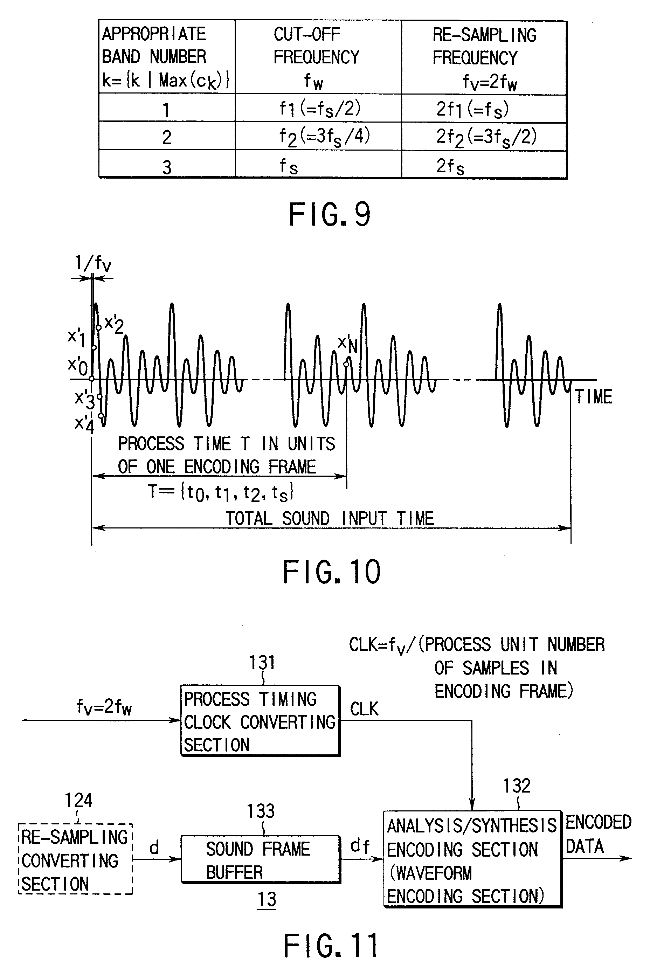

Thus, the summing-up sections 12124A - 12124C sum up the outputs $[c_1]_i$ - $[c_3]_i$ of the subtracters 12123A - 12123C, respectively, for each time zone of the longest process unit time $t_0$ which includes a number L of samples, thereby inputting the resultant values $[c_1]_j$ - $[c_3]_j$ to the maximum value detecting section 12125. The maximum value detecting section 12125 detects a maximum value in each zone which includes the number L of samples, thereby determining which frequency component is maximum in amount. An appropriate band number k as an ID number indicative of a frequency band corresponding to the maximum value is input from the maximum value detecting section 12125 to the cut-off frequency and re-sampling frequency setting section 12126. The cut-off frequency and re-sampling frequency setting section 12126 has a table for setting the cut-off frequency and the re-sampling frequency as shown in FIG. 9, and is adapted to output a cut-off frequency $f_w$ and re-sampling frequency $f_v$ corresponding to the appropriate band number k as a result of reference to the setting table.

FIG. 10 shows the relationship between the waveform of an input sound and the encoding frame, which is obtained after adaptive band conversion is performed in the re-sampling converting section 124 of FIG. 3. In the re-sampling converting section 124, sound data from the adaptive anti-aliasing filter 123 is re-sampled in accordance with the re-sampling frequency $f_v$ (i.e. at a cycle of $1/f_v$) supplied from the cut-off frequency and re-sampling frequency setting section 12126 of the appropriate band determining/selecting section 1212, thereby obtaining sampling values $X'_0$, $X'_1$, ..., $X'_N$.

The sound compression encoding section 13, which receives the re-sampled sound data and the re-sampling frequency $f_v$, comprises a process timing clock converting section 131, an analysis/synthesis encoding section (or waveform encoding section) 132 and a sound frame buffer 133 as shown in FIG. 11.

The re-sampling frequency $f_v$ determined by the cut-off frequency and re-sampling frequency setting section 12126 of the appropriate band determining/selecting section 1212 is input to the process timing clock converting section 131. The process timing clock converting section 131 generates a clock signal CLK indicative of a process time point in each frame by dividing the re-sampling frequency $f_v$ by the number of samples included in each frame, and supplies the signal CLK to the analysis/synthesis encoding section 132. On the other hand, sound data $\underline{d}$ re-sampled in the re-sampling converting section 124 is once stored in the sound frame buffer 133. The analysis/synthesis encoding section 132 responds to the clock signal CLK to thereby sequentially read sound data $d_f$ for each encoding frame from the sound frame buffer 133, encode it and output the resultant data as encoded data to the data recording section 14 of the next stage.

Supposing that the process unit is set at 240 samples, the time required for completing processing in each frame is 60 msec. for 4 kHz sampling, 30 msec. for 8 kHz sampling, and 15 msec. for 16 kHz sampling.

The structure of the sound compression encoding section 13 is for performing real-time processing. Where re-sampled sound data is stored in, for example, a memory, read when necessary therefrom and subjected to analysis/synthesis encoding, no clock signal CLK is necessary since it is not always necessary to perform processing in units of one sound encoding frame and in a real-time manner.

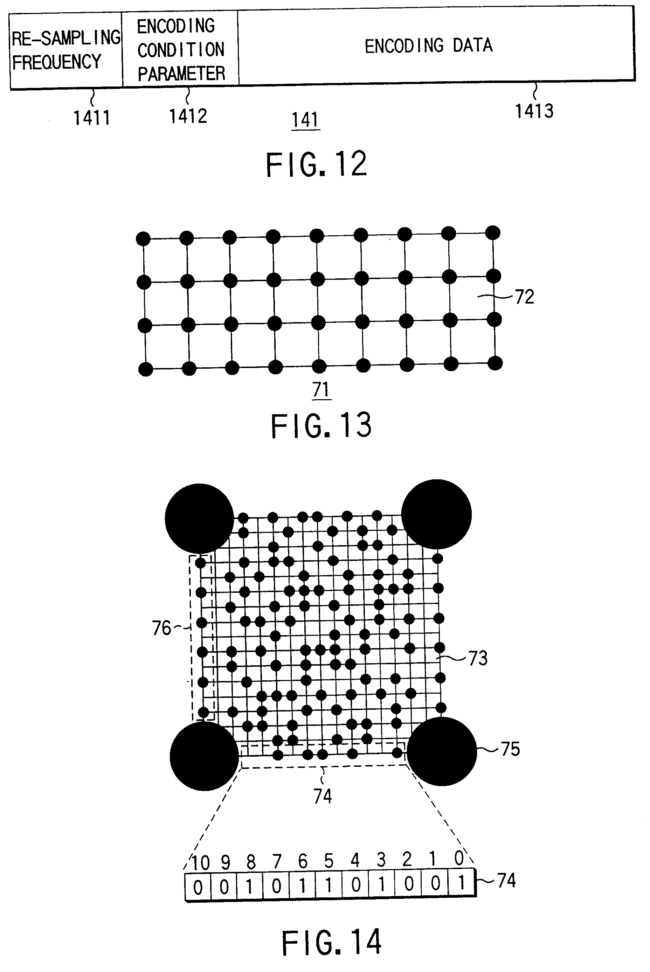

The data recording section 14 records, in the recording/transmitting medium 4, an encoded sound file which is obtained by attaching a header to encoded data from the analysis/synthesis encoding section 132. FIG. 12 shows an example of a data structure of the encoded sound file. As shown, an encoded sound file 141 comprises a re-sampling frequency value 1411 as a header, an encoding condition parameter 1412 and encoded data 1413. The re-sampling frequency value 1411 indicates a re-sampling frequency $f_v$ from the cut-off frequency and re-sampling frequency setting section 12126. The encoding condition parameter 1412 is data indicative of various parameters used for encoding including compression.

Since the re-sampling frequency $f_v$ is known to be twice the cut-off frequency $f_w$, the encoded sound file 141 may include the cut-off frequency in place of the re-sampling frequency, or both the cut-off frequency and the re-sampling frequency.

Further, various conventional methods can be employed as methods for recording or transmitting the encoded sound file 141 into the recording/transmitting medium 4. For example, as is disclosed in EP 0,670,555 A1 filed by the assignee of the present invention, information such as sound information can be recorded by printing in the form of an optically readable dot code on the recording/transmitting medium 4 such as a paper sheet.

As is illustrated in FIG. 13, the dot code denoted by reference numeral 71 comprises a block group which includes blocks 72 including a predetermined number of dots and arranged in a two-dimensional matrix. Each block 72 which includes a predetermined number of dots is recognized to have a predetermined density in a broad view.

FIG. 14 is an enlarged view of one of the blocks which constitute the dot code 71. As shown, the block 72 includes a data dot pattern section 73 which is obtained by modulating the data of the encoded sound file 141 such that pieces of the data are arranged in accordance with their bit values; and a block header section 74 indicative of information such as the address of the block 72 and disposed in a predetermined positional relationship with respect to the data dot pattern section 73. The block 72 further includes markers 75 situated at predetermined locations, for example, at its four corners, for recognizing the block 72; and a matching dot pattern 76 provided between adjacent ones of the markers 75 in a first direction. The block header section 74 is situated between adjacent ones of the markers 75 in a second direction. The dots provided in the block header section 74 and the matching dot pattern 76 have the same size as those (hereinafter referred to as "data dots") provided in the data dot pattern section 73. The data dots have a size of, for example, 40 - 80 $\mu$m. Further, the markers 75 have a greater size than the data dots, and are recorded, on a recording medium, as circular dots having a diameter, for example, five times that of the data dots.

The data of the encoded sound file 141 is modulated into a data dot pattern before being recorded. The modulation is performed to limit the number of data dots continuously arranged in order to discriminate the data dots from the markers 75. For example, when the diameter of the marker 75 is five time that of the data dot, the number of continuously arranged data dots must be limited to 4 or less.

Although FIG. 14 shows a block 72 including ($17 \times 17$) data dots, the block 72 is not limited to this size, but may include ($30 \times 30$) or ($40 \times 40$) data dots. It should be noted that the lines which are arranged in the form of a grid are imaginary ones.

Further, although an apparatus for printing/recording such a dot code 71 is described in detail in the aforementioned publication EP 0,670,555 A1 and therefore will not be explained, it is applicable to the data recording section 14.

As is shown in FIG. 1, the receiving apparatus 2 reproduces, using the data reproducing section 21, the encoded sound file data recorded on or in the recording/transmitting medium 4. When using the above-described dot code 71, a reproducing apparatus also described in detail in the publication EP 0,670,555 A1 can be sued as the data reproducing section 21.

The data reproducing section 21 reproduces the encoded sound file data as described above, and also extracts a re-sampling frequency from the header section of the file. Then, it inputs the extracted re-sampling frequency $f_v$ to the compressed-sound-data decoding section 22 and the band adaptive type output data converting section 23, and also generates a cut-off frequency $f_w$ which is half the re-sampling frequency $f_v$, thereby inputting it to the band adaptive type output data converting section 23. Further, the encoded sound data represented by the data reproducing section 21 is supplied to the compressed-sound-data decoding section 22.

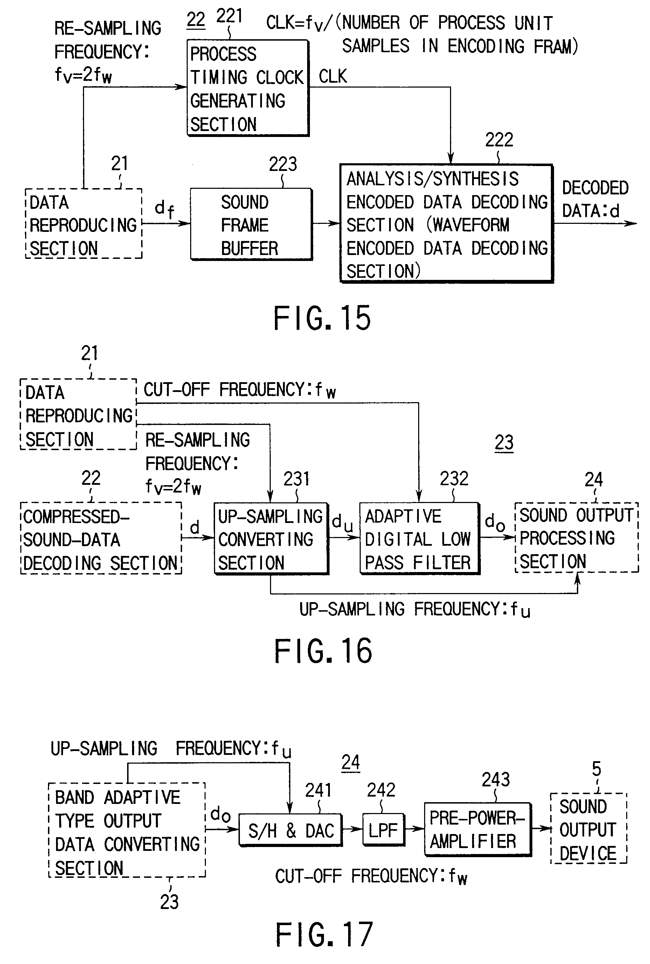

The compressed-sound-data decoding section 22 comprises a process timing clock generating section 221, an analysis/synthesis encoded data decoding section (or a waveform encoded data decoding section) 222, and a sound frame buffer 223 as shown in FIG. 15.

In the compressed-sound-data decoding section 22, the re-sampling frequency $f_v$ extracted in the data reproducing section 21 is fed to the process timing clock generating section 221. The process timing clock generating section 221 divides the re-sampling frequency $f_v$ by the number of process unit samples to thereby determine the frequency of a clock signal indicative of a time point of processing in each encoding frame. The section 221 then creates a clock signal CLK of the determined frequency and feeds it to the analysis/synthesis encoded data decoding section 222. On the other hand, data $d_f$ reproduced by the data reproducing section 21 is once input to and stored in the sound frame buffer 223. The analysis/synthesis encoded data decoding section 222 responds to the clock signal CLK to thereby sequentially read data from the sound frame buffer 223 in units of one encoding frame, and then decode it, thereby outputting resultant data as decoded data $\underline{d}$ to the band adaptive type output data converting section 23 of the next stage.

The structure of the above compressed-sound-data decoding section 22 is for performing real-time processing. Where re-sampled sound data is stored in, for example, a memory, read when necessary therefrom and subjected to analysis/synthesis encoding/decoding processing, no clock signal CLK is necessary since it is not always necessary to perform processing in units of one sound encoding frame and in a real-time manner.

FIG. 16 shows the structure of the band adaptive type output data converting section 23. This section comprises an up-sampling converting section 231 and an adaptive digital low-pass filter 232.

The re-sampling frequency $f_v$ and the cut-off frequency $f_w$ from the data reproducing section 21 are fed to the up-sampling converting section 231 and the adaptive digital low-pass filter 232, respectively. The up-sampling converting section 231 performs up-sampling of the decoded data $\underline{d}$ output from the compressed-sound-data decoding section 22, using a high frequency $f_u$ which is, for example, four times the re-sampling frequency $f_v$. The up-sampling frequency $f_u$ is fed to the sound output processing section 24 of a post stage. The up-sampled data $d_u$ is subjected to the adaptive digital low-pass filter 232, where a frequency component higher than the cut-off frequency $f_w$ is cut off the data. The resultant data is fed to the sound output processing section 24.

The sound output processing section 24 comprises an S/H & ADC 241, an LPF 242 and a pre-power-amplifier 243 as shown in FIG. 17.

In the sound output processing section 24, the up-sampling frequency $f_u$ from the up-sampling converting section 231 of the band adaptive type output data converting section 23 is input to the S/H & ADC 241, where data $d_o$ from the adaptive digital low-pass filter 232 of the band adaptive type output data converting section 23 is sampled and held using the up-sampling frequency $f_u$, and subjected to D/A conversion. The signal, which has been converted to an analog signal as a result of up-sampling by the up-sampling converting section 231, is then subjected to the LPF 242 where its high frequency component is cut. Although in this case, the LPF 242 employs the cut-off frequency $f_w$, its cut-off characteristic may be gentle since pre-filtering is performed in the adaptive digital low-pass filter 232. The output of the LPF 242 is input as an analog sound signal to the pre-power-amplifier 243, amplified by it, then input to and output as an actual sound from the sound output device 5 such as a speaker.

As described above, in the transmitting apparatus 1 of the first embodiment, the frequency band setting section 121 sets the frequency band of a digital sound signal to be transmitted, and determines the cut-off frequency and re-sampling frequency of the digital sound signal on the basis of the set frequency band; the adaptive anti-aliasing filter 123 adaptively filters the to-be-transmitted digital sound signal on the basis of the cut-off frequency; the re-sampling converting section 124 re-samples the digital sound signal having passed through the filter 123, using the determined re-sampling frequency; and the sound compression encoding section 13 subjects the re-sampled digital sound signal to compression encoding in units of a predetermined number of data samples, to thereby generate encoded data. Then, the data recording section 14 records, as an encoded sound file 141 on the recording/transmitting medium 4, the encoded data 1413 and control data, such as the re-sampling frequency 1411, which relates to the cut-off frequency and/or re-sampling frequency determined by the frequency band setting section 121. Thus, the encoded sound file 141 is transmitted to the receiving apparatus 2 via the recording/transmitting medium 4.

In the digital sound signal receiving apparatus 2 for receiving the encoded sound file 141 output from the transmitting apparatus 1 constructed as above, the data reproducing section 21 extracts the cut-off frequency and/or the re-sampling frequency determined by the frequency band setting section 121, using the re-sampling frequency 1411 contained in the encoded sound file 141 transmitted via the recording/transmitting medium 4; and the compressed-sound-data decoding section 22 performs decompression decoding corresponding to the compression encoding processing, using the extracted cut-off frequency and/or re-sampling frequency.

Since in the above-described transmitting apparatus 1, a sound signal has its sound quality (sound band) adaptively limited by the adaptive anti-aliasing filter 123, and the resultant sound signal is sampled using a necessary sampling frequency, and encoded by the single sound compression encoding section 13, the amount of data can be controlled so as to realize sound quality sufficient to satisfy various purposes, which means that generation of an unnecessary amount of data can be avoided. Further, since the data amount can be controlled using a single compression encoding system, the transmitting apparatus can be made at low cost and simple in structure. Also, in the embodiment, the transmitting apparatus 1 transmits both the encoded data and control data relating to the cut-off frequency and/or the re-sampling frequency, while the receiving apparatus 2 extracts the control data to thereby reliably obtain the cut-off frequency/re-sampling frequency used to generate individual encoded data items. Accordingly, each encoded data item can be converted to a sound signal.

[Second Embodiment]

A second embodiment of the invention will be described. In the first embodiment, an adaptive band is determined for each encoded sound data item, whereas in the second embodiment, it is determined for each input sound data item.

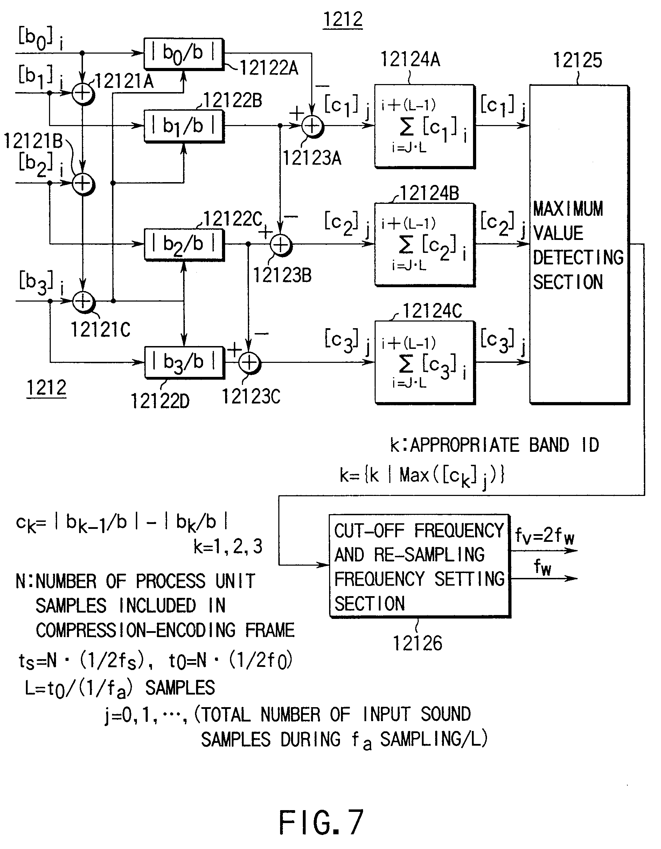

To realize this, it is necessary to change the structure of the adaptive band determining/selecting section 1212 shown in FIG. 7 such that the summing-up sections 12124A - 12124C perform their calculation from $i = 0$ to $i = M$ instead of from $i = jL$ to $i = i + (L-1)$, and the outputs $c_1 - c_3$ of the sections 12124A - 12124C are supplied to the maximum value detecting section 12125. M represents a positive integer such as 0, 1, ..., and indicates the total number of input sound samples.

In other words, in the second embodiment, a single re-sampling frequency and cut-off frequency are determined from the entire input sound.

[Third Embodiment]

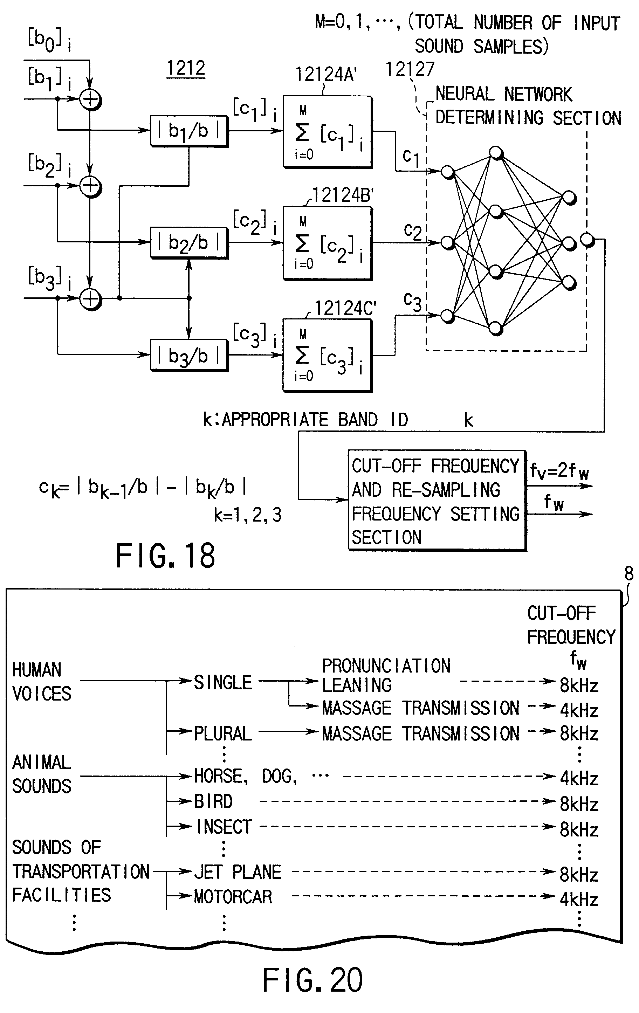

A third embodiment of the invention will be described. As shown in FIG. 18, in the third embodiment, the outputs $c_1 - c_3$ of summing-up sections 12124A' - 12124C' included in an adaptive band determining /selecting section 1212 similar to that of the second embodiment are supplied to a neural network determining section 12127 instead of the maximum value detecting section 12125.

When determining, using the ears of individuals, which band component is a major component, it is difficult to uniformly set the cut-off frequency at, for example, 6 kHz since such determination is based on their subjectivity and hence different determination results will be obtained between them. In light of this, in the third embodiment, various sounds which each contain a major component of a certain band and minor components of other bands are filtered using different cut-off frequencies, and the resultant sounds are actually listened to and compared with each other, thereby causing, for example, a neural network to learn cut-off frequencies which can produce preferable sounds. Thus, it can be determined which cut-off frequency should be used when a sound pattern of a band combination is input.

[Fourth Embodiment]

A fourth embodiment of the invention will be described. In this embodiment, the appropriate band is not automatically but manually set.

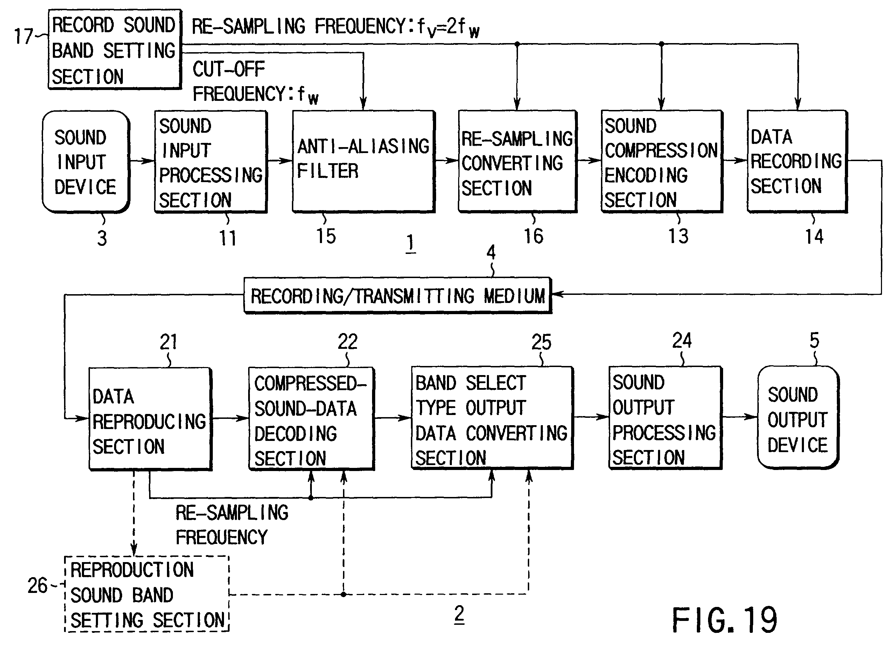

FIG. 19 shows the structure of the fourth embodiment. In FIG. 19, elements similar to those of the first embodiment shown in FIG. 1 are denoted by corresponding reference numerals. In this embodiment, the transmitting apparatus 1 comprises an anti-aliasing filter 15 and a re-sampling converting section 16 instead of the band adaptive type input data converting section 12 of the first embodiment, and also a record sound band setting section 17. Further, the receiving apparatus 2 comprises a band select type output data converting section 25 instead of the band adaptive type output data converting section 23 of the first embodiment, and if necessary, a reproduction sound band setting section 26.

More specifically, in the transmitting apparatus 1 of the fourth embodiment, a sound signal from the sound input device 3 is converted to digital data by the sound input processing section 11 as described above, and then input to the anti-aliasing filter 15. Although the anti-aliasing filter 15 has the same function as the adaptive anti-aliasing filter 123 of the first embodiment, the cut-off frequency $f_w$ of the filter 15 is set by the user via the record sound band setting section 17.

The record sound band setting section 17 includes a switch for permitting the user to optionally set one of a plurality of cut-off frequencies $f_w$, and is arranged to supply the anti-aliasing filter 15 with the set cut-off frequency $f_w$ and supply the re-sampling converting section 16, the sound compression encoding section 14 and the data recording section 14 with a re-sampling frequency $f_v$ which is twice the set cut-off frequency $f_w$.

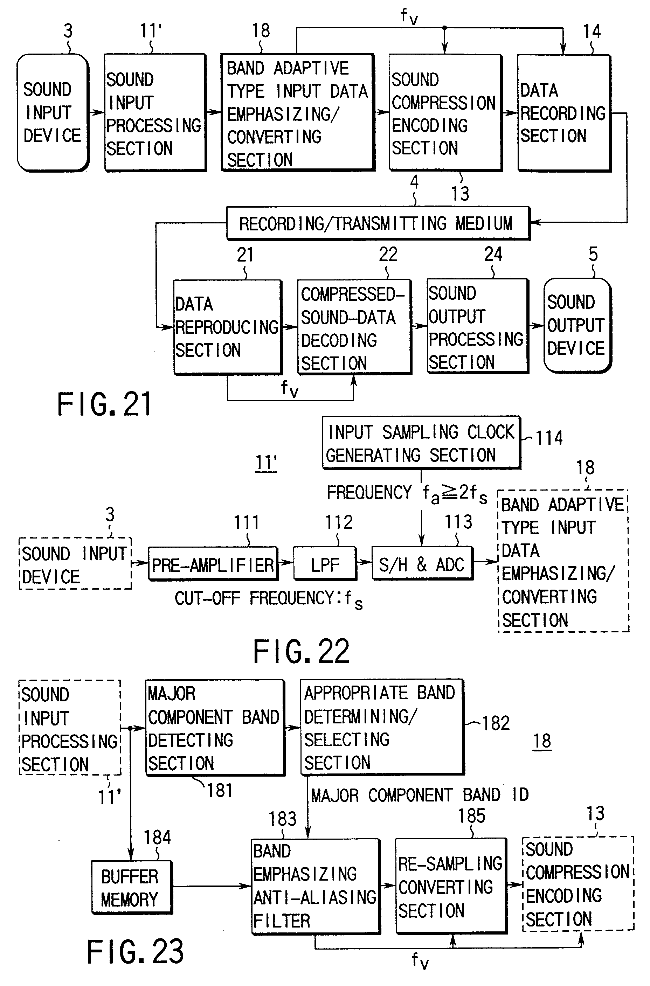

It is preferable to prepare a table sheet 8, as shown in FIG. 20, which indicates the relationship between a to-be-recorded sound and the cut-off frequency $f_w$ and is used as an auxiliary member for permitting the user to select a desired cut-off frequency $f_w$ through the record sound band setting section 17. The table sheet 8 enables the user to easily know from the type of a to-be-recorded sound which cut-off frequency $f_w$ should be set. It is a matter of course that a table as described in the table sheet 8 may be set in the record sound band setting section 17 so that the user can select and set a sound type to thereby automatically set a cut-off frequency $f_w$ corresponding thereto.

Sound data whose reflected noise is removed by the anti-aliasing filter 15 is input to the re-sampling converting section 16 which corresponds to the re-sampling converting section 124 of the first embodiment, where the data is re-sampled using the re-sampling frequency $f_v$ set by the record sound band setting section 17. The re-sampled sound data is input to the sound compression encoding section 13, where it is subjected to compression encoding in units of a predetermined number of data samples. The compression encoded data is input to the data recording section 14, where it is recorded as the encoded sound file 141 on the recording/transmitting medium 4. The encoded sound file 141 includes the re-sampling frequency 1411 as a header as in the first embodiment.

On the other hand, in the receiving apparatus 2, the data reproducing section 21 reproduces the encoded sound file recorded on the recording/transmitting medium 4, and also extracts the re-sampling frequency from the header section. The extracted re-sampling frequency is input to the compressed-sound-data decoding section 22 and the band select type output data converting section 25, while the reproduced encoded sound data is input to the compressed-sound-data decoding section 22. The section 22 decodes the input encoded sound data and input the decoded sound data to the band select type output data converting section 25. The section 25 corresponds to the band adaptive type output data converting section 23 of the first embodiment, and is arranged to perform necessary up-sampling on the basis of the re-sampling frequency selected by the user and output from the data reproducing section 21, thereby inputting the resultant sound data to the sound output processing section 24. The section 24 performs D/A conversion, filtering, amplification, etc., and outputs a sound corresponding to the input sound data through the sound output device 5 such as a speaker, an earphone, a headphone, etc.

Instead of the re-sampling frequency extracted in the data reproducing section 21, a re-sampling frequency set in the reproduction sound band setting section 26 may be supplied to the compressed-sound-data decoding section 22 and the band select type output data converting section 25 as indicated by the broken lines in FIG. 19. In this case, the reproduction sound band setting section 26 includes, for example, a switch for permitting the user to optionally set one of a plurality of re-sampling frequencies $f_v$ as in the case of the record sound band setting section 17 of the transmitting apparatus 1, and also includes a display section for displaying the re-sampling frequency supplied from the data reproducing section 21. When the user has selected and set the re-sampling frequency $f_v$ using the switch while observing the display section, the re-sampling frequency is supplied to the compressed-sound-data decoding section 22 and the band select type output data converting section 25.

[Fifth Embodiment]

A fifth embodiment of the invention will be described. This embodiment is applied to a case where the determined appropriate band cannot be used in light of its data amount. In this embodiment, a band lower than the appropriate band is employed and a high frequency area of the band is emphasized.

FIG. 21 illustrates the structure of the fifth embodiment, in which elements similar to those of the first embodiment shown in FIG. 1 are denoted by corresponding reference numerals. In this embodiment, the transmitting apparatus 1 comprises a sound input processing section 11' and a band adaptive type input data emphasizing/converting section 18, which are used instead of the sound input processing section 11 and the band adaptive type input data converting section 12, respectively. Further, in the receiving apparatus 2, the band adaptive type output data converting section 23 is not employed, and the output of the compressed-sound-data decoding section 22 is directly supplied to the sound output processing section 24.

As is understood from FIG. 22, the sound input processing section 11' is obtained by removing the sampling frequency converting section from the voice input processing section 11 shown in FIG. 2.

Further, as shown in FIG. 23, the band adaptive type input data emphasizing/converting section 18 includes a major component band detecting section 181, an appropriate band determining/selecting section 182, a band emphasizing anti-aliasing filter 183, a buffer memory 184 and a re-sampling converting section 185. More specifically, digital sound data from the sound input processing section 11' is supplied to and stored in the buffer memory 184 corresponding to the buffer memory 122 of the first embodiment, and also supplied to the major component band detecting section 181 corresponding to the major component band detecting section 1211 of the first embodiment. The major component band detecting section 181 detects the major frequency band of the input digital sound data, and supplies the detection result to the appropriate band determining/selecting section 182. The section 182 has a structure obtained by removing the cut-off frequency and re-sampling frequency setting section 12126 from the appropriate band determining/selecting section 1212 shown in FIG. 7. Accordingly, in this embodiment, an appropriate band ID output from the maximum value detecting section 12125 is supplied as a major component band ID to the band emphasizing anti-aliasing filter 183.

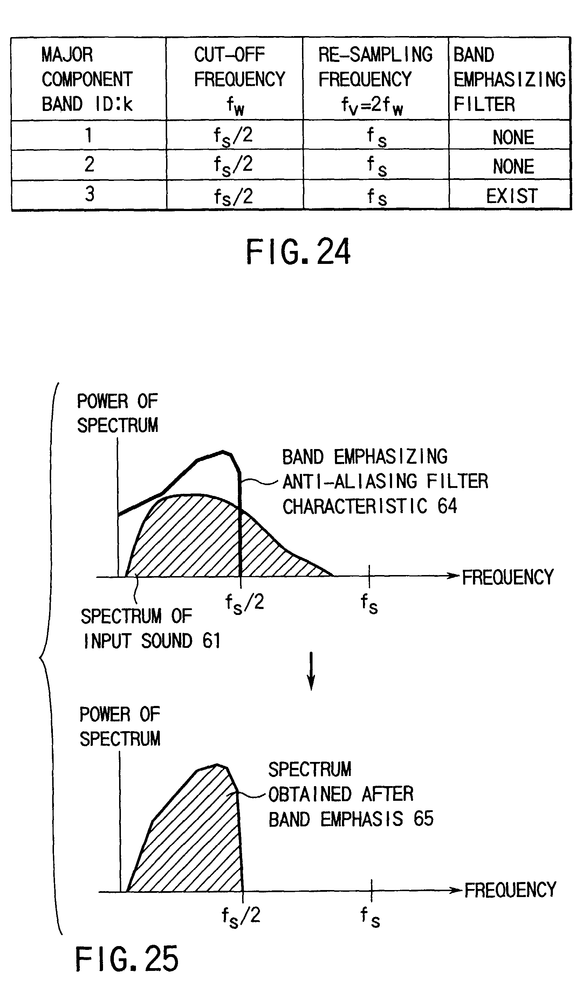

The band emphasizing anti-aliasing filter 183 has a setting condition table as shown in FIG. 24, and is arranged to refer to the setting table on the basis of the major component band ID output from the appropriate band determining/selecting section 182, thereby determining the cut-off frequency $f_w$, the re-sampling frequency $f_v$, and whether or not there is a band emphasizing filter, and supplying the re-sampling frequency $f_v$ to the re-sampling converting section 185, and also to the sound compression encoding section 13 and data recording section 14 which are located downstream of the band adaptive type input data emphasizing/converting section 18. Then, digital sound data stored in the buffer memory 184 is read, and the spectrum 61 of the input sound corresponding to the sound data is filtered by a filter which has a band emphasizing anti-aliasing filter characteristic 64 based on the cut-off frequency $f_w$, as is shown in the upper portion of FIG. 25. After this band emphasizing processing, sound data having a spectrum 65 is obtained, as is shown in the lower portion of FIG. 25.

The sound data obtained through the band emphasizing anti-aliasing filter 183 is input to a re-sampling converting section 185 corresponding to the re-sampling converting section 124 of the first embodiment, then again re-sampled using the re-sampling frequency $f_v$, and supplied to the sound compression encoding section 13.

The invention is not limited to the above-described embodiments, but may be modified in various manners without departing from its scope. In summary, the invention can provide an apparatus as described below.

(1) A digital sound signal transmitting apparatus (1) for compression encoding a digitized sound signal into encoded data, and transmitting the encoded data via a predetermined medium (4), comprising:

a frequency band setting unit (121; 17; 18) for setting a frequency band for a to-be-transmitted digital sound signal, and determining a cut-off frequency ($f_w$) and a re-sampling frequency ($f_v$) for the digital sound signal on the basis of the set frequency band;
an adaptive band limiting filter (123; 15; 183) for adaptively filtering the to-be-transmitted digital sound signal on the basis of the cut-off frequency ($f_v$) determined by the frequency band setting unit (121; 17; 18);
a re-sampling unit (124; 16; 185) for re-sampling the digital sound signal having passed through the adaptive band limiting filter (123; 15; 183), using the re-sampling frequency ($f_v$) determined by the frequency band setting unit (121; 17; 18); and
a compression encoding unit (13) for compression encoding the digital sound signal re-sampled by the re-sampling unit (124; 16; 185), in units of a predetermined number of data samples, thereby creating encoded data.

When subjecting a sound signal to real-time processing and then recording or transmitting it, there is a basic demand to minimize the amount of data in order to minimize the transmission load on the transmission channel, and also to transmit sound signals of quality appropriate for purposes. The data amount and the sound quality have a "trade-off" relationship. To minimize the data amount and to secure a sound band which is one of important factors for obtaining a high quality sound, compression encoding is generally performed. To perform the compression encoding, a plurality of encoding methods using a predetermined compression ratio are usually prepared and selectively used.

On the other hand, in the structure described in item (1), the sound quality (sound band) is adaptively limited by an adaptive band limiting filter, then re-sampled using a necessary re-sampling frequency, and encoded by single compression encoding unit. Accordingly, data amount control can be realized which enables sufficient expression of high quality sounds requested for various purposes, thereby preventing generation of an unnecessary amount of data. Moreover, the data amount control is realized using a single compression encoding method, with the result that a transmitting apparatus can have a simple structure and can be made at a low cost.

(2) The digital sound signal transmitting apparatus according to item (1), wherein when the predetermined number of data samples is N and the re-sampling frequency ($f_v$) is f, the compression encoding unit (13) performs compression encoding on the predetermined number N of data samples in units of a time period T, where the equation $N = Tf$ is satisfied.

Where re-sampling is performed using a re-sampling frequency f, a number N of data samples, which number is a processing unit of compression encoding, can be processed in units of a time period T where $N = Tf$ is satisfied. Therefore, real-time processing can be performed without any extra buffer memory for time adjustment.

(3) The digital sound signal transmitting apparatus according to item (1), wherein the compression encoding unit (13) always performs compression encoding in units of a minimum value of the time period T which the compression encoding unit (13) can assume, irrespective of the re-sampling frequency ($f_v$).

The fact that the compression encoding is performed in units of a minimum time period T means that real-time processing can be performed on data re-sampled using a maximum re-sampling frequency. In other words, real-time processing can be always performed on any data re-sampled using a re-sampling frequency which is lower than the maximum one. Therefore, real-time processing can be performed without any extra buffer memory for time adjustment.

(4) The digital sound signal transmitting apparatus according to item (1), wherein control data (1411) related to the cut-off frequency ($f_w$) and/or the re-sampling frequency ($f_v$) determined by the frequency band setting unit (121, 17, 18) is transmitted through the predetermined medium (4), together with the encoded data (1413).

The cut-off frequency and/or the re-sampling frequency having used for the generation of the encoded data can be individually informed of in a reliable manner as a result of the transmission of control data related to the cut-off frequency and/or the re-sampling frequency, together with encoded data. Accordingly, decoded data can be converted to a sound signal without errors.

(5) The digital sound signal transmitting apparatus according to item (1), wherein the frequency band setting unit (17) includes an operation unit (17) to be operated by a user so as to select one of a plurality of frequency bands.

Since the user can select a guarantee frequency band contained in a to-be-transmitted sound signal, they can select one of a plurality of frequency bands from their own judgment in hearing. This means that the user can control sound quality and hence optionally and flexibly select an optimal frequency band.

(6) The digital sound signal transmitting apparatus according to item (1), wherein the frequency band setting unit (121; 18) includes an automatic frequency band detecting unit (1211, 1212; 181, 182, 183) for detecting, from a to-be-transmitted digital sound signal, a frequency band contained in the digital sound signal, and determining the cut-off frequency ($f_w$) and the re-sampling frequency ($f_v$) on the basis of the detected frequency band.

The automatic frequency band detecting unit, which automatically selects an appropriate frequency band for a sound signal, enables the user to confirm an appropriate frequency band for an individual sound signal, to save time and labor for selecting the appropriate frequency band and to perform easy and short-time operation.

(7) The digital sound signal transmitting apparatus according to item (1), wherein:

the frequency band setting unit (121; 18) includes an automatic frequency band detecting unit (1211, 1212; 181, 182, 183) for detecting, from a to-be-transmitted digital sound signal, a frequency band contained in the digital sound signal, and determining the cut-off frequency ($f_w$) and the re-sampling frequency ($f_v$) on the basis of the detected frequency band;

the compression encoding unit (13) performs, when the predetermined number of data samples is N and the re-sampling frequency ($f_v$) is f, compression encoding of the predetermined number N of data samples in units of a time period T, where the equation N = Tf is satisfied; and

the automatic frequency band detecting unit (1211, 1212; 181, 182, 183) detects the frequency band of the to-be-transmitted digital sound signal in units of a maximum value of the time period T which the compression encoding unit (13) can assume.

Although there is a case where a necessary guarantee frequency band is set for the entire sound signal, to control, when necessary, the guarantee frequency band for individual local portions of the sound signal is very advantageous in order to save the data amount of the entire sound signal and secure sound quality, since lots of sound signals exist which each contain different frequency components.

Since in the structure described in item (7), sound data is processed in units of a predetermined encoding frame, the re-sampling frequency can be changed in units of the encoding frame. When the guarantee frequency band to be selected in units of the encoding frame is changed, the tine of the encoding frame itself changes. However, which guarantee frequency band should be selected is not known before it is detected. Accordingly, the detection period of the to-be-selected guarantee frequency band must be at least kept unchanged irrespective of the encoding frame which will change after the detection of the guarantee frequency band.

When the frequency band of a sound signal is automatically detected in units of a maximum process unit time period which the compression encoding unit can assume, and an appropriate re-sampling frequency based on the detected frequency band is used, the re-sampling frequency can be changed in a consistent and flexible manner for a process unit time period less than the maximum one. As a result, the guarantee frequency band of the sound signal can be controlled in units of a shorter process unit time period, and hence sound quality can be secured using an optimal amount of data.

(8) The digital sound signal transmitting apparatus according to item (1), wherein the adaptive band limiting filter (183) also serves as a band emphasizing filter for emphasizing a predetermined frequency band contained in the to-be-transmitted digital sound signal.

Since the adaptive band limiting filter also serves as a band emphasizing filter for emphasizing a predetermined frequency band, even a sound signal containing a frequency component which exceeds the set frequency band can be aurally compensated without changing the band.

(9) The digital sound signal transmitting apparatus according to item (1), wherein the apparatus is an encoded-image recording apparatus for transmitting a digital sound signal by recording, by printing, the signal as an optically readable encoded image (71) on a predetermined printing medium as the predetermined medium (4).

In the above structure, sound information is transmitted as a result of being recorded on a printing medium as an optically readable encoded image, which could not be realized by any conventional printing medium. Thus, the invention can provide cheap and easy-to-handle visual, aural information, in addition to conventional visual information such as images or characters.

(10) A digital sound signal receiving apparatus (2) for receiving data which contains encoded data transmitted from a digital sound signal transmitting apparatus including: a frequency band setting unit (121; 17; 18) for setting a frequency band for a to-be-transmitted digital sound signal, and determining a cut-off frequency ($f_w$) and a re-sampling frequency ($f_v$) for the digital sound signal on the basis of the set frequency band; an adaptive band limiting filter (123; 15; 183) for adaptively filtering the to-be-transmitted digital sound signal on the basis of the cut-off frequency ($f_v$) determined by the frequency band setting unit (121; 17; 18); a re-sampling unit (124; 16; 185) for re-sampling the digital sound signal having passed through the adaptive band limiting filter (123; 15; 183), using the re-sampling frequency ($f_v$) determined by the frequency band setting unit (121; 17; 18); and a compression encoding unit (13) for compression encoding the digital sound signal re-sampled by the re-sampling unit (124; 16; 185), in units of a predetermined number of data samples, thereby creating encoded data,

the receiving apparatus comprising:
an input designating unit (21; 21, 26) for designating input of the cut-off frequency ($f_w$) and/or the resampling frequency ($f_v$) determined by the frequency band setting unit (121; 17; 18); and
a decompression decoding unit (22) for performing decompression decoding corresponding to the compression encoding on the basis of the cut-off frequency ($f_w$) and/or the re-sampling frequency ($f_v$) designated by the input designating unit (21; 21, 26).

In the transmitting apparatus, a sound signal has its sound quality (sound band) adaptively limited by the adaptive band limiting filter, and is sampled using a necessary sampling frequency and encoded by single encoding unit. As a result, the data amount is controlled to a value which is sufficient to express a sound of quality required for a purpose. On the other hand, when receiving the encoded sound data, the user of the receiving apparatus can input the cut-off frequency and/or the re-sampling frequency determined when the sound is encoded and necessary to reproduce the sound. This means that the reproducing condition can be set in a reliable manner, and hence that the encoded data can be decoded and reproduced without errors. Thus, the invention can realize transmission of a sound signal with its data amount controlled (i.e. without generating an extra amount of data), using a single compression encoding method. This enables simplification of the structure of the apparatus and reduction of its manufacturing cost.

(11) The digital sound signal receiving apparatus according to item (10), wherein:

when the predetermined number of data samples is N and the re-sampling frequency ($f_v$) is f, the compression encoding unit (13) performs compression encoding of the predetermined number N of data samples in units of a time period T, where the equation N = Tf is satisfied; and
the decompression decoding unit (22) performs decompression decoding in units of the time period T.

Where re-sampling is performed using a re-sampling frequency f, a number N of data samples, which number is a processing unit of compression encoding, can be processed in units of a time period T where N = Tf is satisfied. Therefore, real-time processing can be performed without any extra buffer memory for time adjustment.

(12) The digital sound signal receiving apparatus according to item (11), wherein:

the compression encoding unit (13) always performs compression encoding in units of a minimum value of the time period T which the compression encoding unit (13) can assume, irrespective of the re-sampling frequency ($f_v$); and
the decompression decoding unit (22) always performs the decompression decoding in units of the minimum value of the time period T.

The fact that the compression encoding is performed in units of a minimum time period T means that real-time processing can be performed on data re-sampled using a maximum re-sampling frequency. In other words, real-time processing can be always performed on any data re-sampled using a re-sampling frequency which is lower than the maximum one. Further, decompression decoding of the encoded data in units of the minimum time period T enables real-time processing of data re-sampled using any re-sampling frequency. Therefore, real-time processing can be performed without any extra buffer memory for time adjustment. Further, since it is not necessary to control the process time in accordance with the re-sampling frequency, decoding of encoded data suitable for various purposes can be performed.

(13) The digital sound signal receiving apparatus according to item (10), wherein:

the transmitting apparatus (1) is arranged to transmit, as the data, control data (1411) related to the cut-off frequency ($f_w$) and/or the re-sampling frequency ($f_v$) determined by the frequency band setting units (121, 17, 18) and the encoded data (1413) through the predetermined medium (4); and

the input designating unit (21; 21, 26) includes a control data extracting unit for extracting the control data (1411) from received data, and supplying it to the decompression decoding means (22).

The cut-off frequency and the re-sampling frequency used when generating an individual encoded data item can be confirmed by the transmission of the encoded data item and the control data related to the cut-off frequency and/or the re-sampling frequency, and by the extraction of the control data when receiving the signal. Therefore, decoded data can be converted to a sound signal without errors.

(14) The digital sound signal receiving apparatus according to item (10), wherein the input designating unit (21, 26) includes an operation unit (26) to be operated by a user so as to select one cut-off frequency ($f_w$) and/or one re-sampling frequency ($f_v$) from a plurality of cut-off frequencies and/or re-sampling frequencies.

The fact that the user can select and designate, when having received encoded data transmitted, the cut-off frequency and/or the re-sampling frequency determined when encoding original data and necessary to restore the encoded data enables reliable setting of the restoration condition, and hence enables decoding and reproduction of the encoded data without errors. Even if there is an error, the user can promptly re-select the restoration condition on the basis of their own judgment in hearing. As a result, flexible and optimal restoration/reproduction processing of received encoded data can be realized.

(15) The digital sound signal receiving apparatus according to item (10), wherein the frequency band setting unit (17) includes an operation unit (17) to be operated by a user so as to select one of a plurality of frequency bands.

The fact that the user can select and designate, as a selective item as a frequency band when having received encoded data transmitted, the cut-off frequency and/or the re-sampling frequency determined when encoding original data and necessary to restore the encoded data enables reliable setting of the restoration condition which is easy to instinctively understand.

(16) The digital sound signal receiving apparatus according to item (10), wherein the frequency band setting unit (121; 18) includes an automatic frequency band detecting unit (1211, 1212; 181, 182, 183) for detecting, from a to-be-transmitted digital sound signal, a frequency band contained in the digital sound signal, and determining the cut-off frequency ($f_w$) and the re-sampling frequency ($f_v$) on the basis of the detected frequency band.

The automatic frequency band detecting unit, which automatically selects an appropriate frequency band for a sound signal, enables the user to confirm an appropriate frequency band for an individual sound signal, to save time and labor for selecting the appropriate frequency band and to perform easy and short-time operation.

(17) The digital sound signal receiving apparatus according to item (10), wherein:

the frequency band setting unit (121; 18) includes an automatic frequency band detecting unit (1211, 1212; 181, 182, 183) for detecting, from a to-be-transmitted digital sound signal, a frequency band contained in the digital sound signal, and determining the cut-off frequency ($f_w$) and the re-sampling frequency ($f_v$) on the basis of the detected frequency band;

the compression encoding unit (13) performs, when the predetermined number of data samples is N and the re-sampling frequency ($f_v$) is f, compression encoding of the predetermined number N of data samples in units of a time period T, where the equation $N = Tf$ is satisfied; and

the automatic frequency band detecting unit (1211, 1212; 181, 182, 183) detects the frequency band of the to-be-transmitted digital sound signal in units of a maximum value of the time period T which the compression encoding unit (13) can assume.

Although there is a case where a necessary guarantee frequency band is set for the entire sound signal, to control, when necessary, the guarantee frequency band for individual local portions of the sound signal is very advantageous in order to save the data amount of the entire sound signal and secure sound quality, since lots of sound signals exist which each contain different frequency components.

Since in the structure described in item (17), sound data is processed in units of a predetermined encoding frame, the re-sampling frequency can be changed in units of the encoding frame. When the guarantee frequency band to be selected in units of the encoding frame is changed, the tine of the encoding frame itself changes. However, which guarantee frequency band should be selected is not known before it is detected. Accordingly, the detection period of the to-be-selected guarantee frequency band must be at least kept unchanged irrespective of the encoding frame which will change after the detection of the guarantee frequency band.

When the frequency band of a sound signal is automatically detected in units of a maximum process unit time period which the compression encoding unit can assume, and an appropriate re-sampling frequency based on the detected frequency band is used, the re-sampling frequency can be changed in a consistent and flexible manner for a process unit time period less than the maximum one. As a result, the guarantee frequency band of the sound signal can be controlled in units of a shorter process unit time period, and hence sound quality can be secured using an optimal amount of data.

(18) The digital sound signal receiving apparatus according to item (10), wherein the adaptive band limiting filter (183) also serves as a band emphasizing filter for emphasizing a predetermined frequency band contained in the to-be-transmitted digital sound signal.

Although there is a case where a necessary guarantee frequency band is set for the entire sound signal, to control, when necessary, the guarantee frequency band for individual local portions of the sound signal is very advantageous in order to save the data amount of the entire sound signal and secure sound quality, since lots of sound signals exist which each contain different frequency components. However, the adaptive band limiting filter, which also serves as a band emphasizing filter for emphasizing a predetermined frequency band, enables compensation in hearing, without changing the band, of even a sound signal containing a frequency component which exceeds the set frequency band. Thus, optimal sound quality can be obtained with the entire data amount suppressed.

(19) The digital sound signal receiving apparatus according to item (10), wherein:

the transmitting apparatus (1) is an encoded-image recording apparatus for transmitting a digital sound signal by recording, by printing, the signal as an optically readable encoded image (71) on a predetermined printing medium as the predetermined medium (4); and
the receiving apparatus (2) is an encoded-image reading apparatus for receiving a digital sound signal by optically reading the encoded image (71) recorded, by printing, on the printing medium.

In the above structure, sound information can be transmitted and received as a result of being recorded on a printing medium as an optically readable encoded image, which could not be realized by any conventional printing medium. Thus, the invention can provide cheap and easy-to-handle visual, aural information, in addition to conventional visual information such as images or characters.

## Claims

1. A digital sound signal transmitting apparatus (1) for compression encoding a digitized sound signal into encoded data, and transmitting the encoded data via a predetermined medium (4), characterized by comprising:

   a frequency band setting unit (121; 17; 18) for setting a frequency band for a to-be-transmitted digital sound signal, and determining a cut-off frequency ($f_w$) and a re-sampling frequency ($f_v$) for the digital sound signal on the basis of the set frequency band;
   an adaptive band limiting filter (123; 15; 183) for adaptively filtering the to-be-transmitted digital sound signal on the basis of the cut-off frequency ($f_v$) determined by said frequency band setting unit (121; 17; 18);
   a re-sampling unit (124; 16; 185) for re-sampling the digital sound signal having passed through said adaptive band limiting filter (123; 15; 183), using the re-sampling frequency ($f_v$) determined by said frequency band setting unit (121; 17; 18); and
   a compression encoding unit (13) for compression encoding the digital sound signal re-sampled by said re-sampling unit (124; 16; 185), in units of a predetermined number of data samples, thereby creating encoded data.

2. The digital sound signal transmitting apparatus according to claim 1, characterized in that when the predetermined number of data samples is N and the re-sampling frequency ($f_v$) is f, said compression encoding unit (13) performs compression encoding on the predetermined number N of data samples in units of a time period T, where the equation N = Tf is satisfied.

3. The digital sound signal transmitting apparatus according to claim 1, characterized in that said compression encoding unit (13) always performs compression encoding in units of a minimum value of the time period T which said compression encoding unit (13) can assume, irrespective of the re-sampling frequency ($f_V$).

4.  The digital sound signal transmitting apparatus according to claim 1, characterized in that control data (1411) related to the cut-off frequency ($f_W$) and/or the re-sampling frequency ($f_V$) determined by said frequency band setting unit (121, 17, 18) is transmitted through said predetermined medium (4), together with the encoded data (1413).

5.  The digital sound signal transmitting apparatus according to claim 1, characterized in that said frequency band setting unit (17) includes an operation unit (17) to be operated by a user so as to select one of a plurality of frequency bands.

6.  The digital sound signal transmitting apparatus according to claim 1, characterized in that said frequency band setting unit (121; 18) includes an automatic frequency band detecting unit (1211, 1212; 181, 182, 183) for detecting, from a to-be-transmitted digital sound signal, a frequency band contained in the digital sound signal, and determining the cut-off frequency ($f_W$) and the re-sampling frequency ($f_V$) on the basis of the detected frequency band.

7.  The digital sound signal transmitting apparatus according to claim 1, characterized in that:

    said frequency band setting unit (121; 18) includes an automatic frequency band detecting unit (1211, 1212; 181, 182, 183) for detecting, from a to-be-transmitted digital sound signal, a frequency band contained in the digital sound signal, and determining the cut-off frequency ($f_W$) and the re-sampling frequency ($f_V$) on the basis of the detected frequency band;
    said compression encoding unit (13) performs, when the predetermined number of data samples is N and the re-sampling frequency ($f_V$) is f, compression encoding of the predetermined number N of data samples in units of a time period T, where the equation N = Tf is satisfied; and
    said automatic frequency band detecting unit (1211, 1212; 181, 182, 183) detects the frequency band of the to-be-transmitted digital sound signal in units of a maximum value of the time period T which said compression encoding unit (13) can assume.

8.  The digital sound signal transmitting apparatus according to claim 1, characterized in that said adaptive band limiting filter (183) also serves as a band emphasizing filter for emphasizing a predetermined frequency band contained in the to-be-transmitted digital sound signal.

9.  The digital sound signal transmitting apparatus according to claim 1, characterized in that the transmitting apparatus is an encoded-image recording apparatus for transmitting a digital sound signal by recording, by printing, the signal as an optically readable encoded image (71) on a predetermined printing medium as said predetermined medium (4).

10. A digital sound signal receiving apparatus (2) for receiving data which contains encoded data transmitted from a digital sound signal transmitting apparatus, characterized in that:

    said transmitting apparatus includes: a frequency band setting unit (121; 17; 18) for setting a frequency band for a to-be-transmitted digital sound signal, and determining a cut-off frequency ($f_W$) and a re-sampling frequency ($f_V$) for the digital sound signal on the basis of the set frequency band; an adaptive band limiting filter (123; 15; 183) for adaptively filtering the to-be-transmitted digital sound signal on the basis of the cut-off frequency ($f_V$) determined by said frequency band setting unit (121; 17; 18); a re-sampling unit (124; 16; 185) for re-sampling the digital sound signal having passed through said adaptive band limiting filter (123; 15; 183), using the re-sampling frequency ($f_V$) determined by said frequency band setting unit (121; 17; 18); and a compression encoding unit (13) for compression encoding the digital sound signal re-sampled by said re-sampling unit (124; 16; 185), in units of a predetermined number of data samples, thereby creating encoded data, and said receiving apparatus comprising:
    an input designating unit (21; 21, 26) for designating input of the cut-off frequency ($f_W$) and/or the re-sampling frequency ($f_V$) determined by said frequency band setting unit (121; 17; 18); and
    a decompression decoding unit (22) for performing decompression decoding corresponding to the compression encoding on the basis of the cut-off frequency ($f_W$) and/or the re-sampling frequency ($f_V$) designated by the input designating unit (21; 21, 26).

**11.** The digital sound signal receiving apparatus according to claim 10, characterized in that:

when the predetermined number of data samples is N and the re-sampling frequency ($f_v$) is f, said compression encoding unit (13) performs compression encoding of the predetermined number N of data samples in units of a time period T, where the equation N = Tf is satisfied; and
said decompression decoding unit (22) performs decompression decoding in units of the time period T.

**12.** The digital sound signal receiving apparatus according to claim 11, characterized in that:

said compression encoding unit (13) always performs compression encoding in units of a minimum value of the time period T which said compression encoding unit (13) can assume, irrespective of the re-sampling frequency ($f_v$); and
said decompression decoding unit (22) always performs the decompression decoding in units of the minimum value of the time period T.

**13.** The digital sound signal receiving apparatus according to claim 10, characterized in that:

said transmitting apparatus (1) is arranged to transmit, as the data, control data (1411) related to the cut-off frequency ($f_w$) and/or the re-sampling frequency ($f_v$) determined by said frequency band setting units (121, 17, 18) and the encoded data (1413) through said predetermined medium (4); and
said input designating unit (21; 21, 26) includes a control data extracting unit for extracting said control data (1411) from received data, and supplying it to said decompression decoding means (22).

**14.** The digital sound signal receiving apparatus according to claim 10, characterized in that said input designating unit (21, 26) includes an operation unit (26) to be operated by a user so as to select one cut-off frequency ($f_w$) and/or one re-sampling frequency ($f_v$) from a plurality of cut-off frequencies and/or re-sampling frequencies.

**15.** The digital sound signal receiving apparatus according to claim 10, characterized in that said frequency band setting unit (17) includes an operation unit (17) to be operated by a user so as to select one of a plurality of frequency bands.

**16.** The digital sound signal receiving apparatus according to claim 10, wherein characterized in that frequency band setting unit (121; 18) includes an automatic frequency band detecting unit (1211, 1212; 181, 182, 183) for detecting, from a to-be-transmitted digital sound signal, a frequency band contained in the digital sound signal, and determining the cut-off frequency ($f_w$) and the re-sampling frequency ($f_v$) on the basis of the detected frequency band.

**17.** The digital sound signal receiving apparatus according to claim 10, characterized in that:

said frequency band setting unit (121; 18) includes an automatic frequency band detecting unit (1211, 1212; 181, 182, 183) for detecting, from a to-be-transmitted digital sound signal, a frequency band contained in the digital sound signal, and determining the cut-off frequency ($f_w$) and the re-sampling frequency ($f_v$) on the basis of the detected frequency band;
said compression encoding unit (13) performs, when the predetermined number of data samples is N and the re-sampling frequency ($f_v$) is f, compression encoding of the predetermined number N of data samples in units of a time period T, where the equation N = Tf is satisfied; and
said automatic frequency band detecting unit (1211, 1212; 181, 182, 183) detects the frequency band of the to-be-transmitted digital sound signal in units of a maximum value of the time period T which said compression encoding unit (13) can assume.

**18.** The digital sound signal receiving apparatus according to claim 10, characterized in that said adaptive band limiting filter (183) also serves as a band emphasizing filter for emphasizing a predetermined frequency band contained in the to-be-transmitted digital sound signal.

**19.** The digital sound signal receiving apparatus according to claim 10, characterized in that:

said transmitting apparatus (1) is an encoded-image recording apparatus for transmitting a digital sound signal by recording, by printing, the signal as an optically readable encoded image (71) on a predetermined printing medium as said predetermined medium (4); and

said receiving apparatus (2) is an encoded-image reading apparatus for receiving a digital sound signal by optically reading said encoded image (71) recorded, by printing, on said printing medium.

RE-SAMPLING FREQUENCY

```
┌──────────┐   ┌──────────┐   ┌──────────────┐   ┌──────────────┐   ┌──────────┐
│  3       │   │  11      │   │  12          │   │              │   │  14      │
│ SOUND    │   │ SOUND    │   │ BAND ADAPTIVE│   │ SOUND        │   │ DATA     │
│ INPUT    │──▶│ INPUT    │──▶│ TYPE INPUT DATA│─▶│ COMPRESSION  │──▶│ RECORDING│
│ DEVICE   │   │ PROCESSING│  │ CONVERTING   │   │ ENCODING     │   │ SECTION  │
│          │   │ SECTION  │   │ SECTION      │   │ SECTION      │   │          │
└──────────┘   └──────────┘   └──────────────┘   └──────────────┘   └──────────┘
```

TRANSMITTING APPARATUS <u>1</u>  4          13

RECORDING/TRANSMITTING MEDIUM

RECEIVING APPARATUS <u>2</u>

```
┌──────────┐   ┌──────────────┐   ┌──────────────┐   ┌──────────┐   ┌──────────┐
│  21      │   │  22          │   │  23          │   │  24      │   │  5       │
│ DATA     │   │ COMPRESSED-  │   │ BAND ADAPTIVE│   │ SOUND    │   │ SOUND    │
│ REPRODUCING│ │ SOUND-DATA   │──▶│ TYPE OUTPUT  │──▶│ OUTPUT   │──▶│ OUTPUT   │
│ SECTION  │   │ DECODING     │   │ DATA CONVERTING│ │ PROCESSING│  │ DEVICE   │
│          │   │ SECTION      │   │ SECTION      │   │ SECTION  │   │          │
└──────────┘   └──────────────┘   └──────────────┘   └──────────┘   └──────────┘
```

RE-SAMPLING FREQUENCY

## FIG. 1

```
                                    ┌────────────────────────┐
                                    │ INPUT SAMPLING CLOCK   │─ 114
                                    │ GENERATING SECTION     │
                                    └────────────────────────┘
                  11
EX.) MICROPHONE,                    FREQUENCY $f_a \geqq 2f_s$        12
EXTERNAL AUDIO                                                   ┌─────────────┐
DEVICE                                                          │ BAND        │
         111          112          113                          │ ADAPTIVE    │
┌──────────┐  ┌──────────┐ ┌──────────┐ ┌──────────┐           │ TYPE INPUT  │
│ SOUND INPUT│ │ PRE-     │ │ LPF      │ │ S/H & ADC│──────────▶│ DATA        │
│ DEVICE   │─▶│ AMPLIFIER│─▶│          │─▶│          │           │ CONVERTING  │
└──────────┘  └──────────┘ └──────────┘ └──────────┘           │ SECTION     │
     3        CUT-OFF FREQUENCY:$f_s$              115          └─────────────┘
                                          ┌──────────────────┐
┌────────────────┐                        │ SAMPLING FREQUENCY│
│ DIGITAL SOUND  │───────────────────────▶│ CONVERTING SECTION│
│ OUTPUT DEVICE  │                        └──────────────────┘
└────────────────┘
     3'
```

## FIG. 2

FIG. 3

FIG. 4

FIG. 5

FIG. 6

21

$$c_k = | b_{k-1}/b | - | b_k/b |$$
$$k = 1, 2, 3$$

N: NUMBER OF PROCESS UNIT
   SAMPLES INCLUDED IN
   COMPRESSION-ENCODING FRAME

$t_s = N \cdot (1/2f_s)$, $t_0 = N \cdot (1/2f_0)$

$L = t_0/(1/f_a)$ SAMPLES

$j = 0, 1, \cdots$, (TOTAL NUMBER OF INPUT SOUND
              SAMPLES DURING $f_a$ SAMPLING/L)

FIG. 7

1/f_a

x_1  x_2
x_0
x_3  x_4

                                                                          x_L

                                                                  TIME

COMPRESSION-
ENCODING FRAME s
UNIT PROCESS TIME
$t_s = N \cdot (1/2f_s)$

COMPRESSION-
ENCODING FRAME 2
UNIT PROCESS TIME
$t_2 = N \cdot (1/2f_2)$

COMPRESSION-
ENCODING FRAME 1
UNIT PROCESS TIME
$t_1 = N \cdot (1/2f_1)$

COMPRESSION-ENCODING
FRAME 0 UNIT PROCESS TIME
$t_0 = N \cdot (1/2f_0) = L \cdot (1/f_a)$

$\left( \begin{array}{l} \text{※ZONE CONTAINING NUMBER L OF SAMPLES} \\ \text{WHEN USING SAMPLING FREQUENCY } f_a \end{array} \right)$

FIG. 8

| APPROPRIATE BAND NUMBER $k=\{k \mid Max(c_k)\}$ | CUT-OFF FREQUENCY $f_W$ | RE-SAMPLING FREQUENCY $f_V=2f_W$ |
|---|---|---|
| 1 | $f_1 (=f_S/2)$ | $2f_1 (=f_S)$ |
| 2 | $f_2 (=3f_S/4)$ | $2f_2 (=3f_S/2)$ |
| 3 | $f_S$ | $2f_S$ |

## FIG. 9

## FIG. 10

## FIG. 11

| RE-SAMPLING FREQUENCY | ENCODING CONDITION PARAMETER | ENCODING DATA |
|---|---|---|

1411      1412      <u>141</u>      1413

## FIG. 12

<u>72</u>

<u>71</u>

## FIG. 13

76

73

75

74

| 10 | 9 | 8 | 7 | 6 | 5 | 4 | 3 | 2 | 1 | 0 |
|----|---|---|---|---|---|---|---|---|---|---|
| 0  | 0 | 1 | 0 | 1 | 1 | 0 | 1 | 0 | 0 | 1 |

~74

## FIG. 14

RE-SAMPLING
FREQUENCY:
$f_V = 2f_W$

22 221    CLK=$f_V$/(NUMBER OF PROCESS UNIT
                    SAMPLES IN ENCODING FRAM)

PROCESS
TIMING CLOCK
GENERATING
SECTION

CLK

21

DATA
REPRODUCING
SECTION

$d_f$

223

SOUND
FRAME
BUFFER

222

ANALYSIS/SYNTHESIS
ENCODED DATA DECODING
SECTION (WAVEFORM
ENCODED DATA DECODING
SECTION)

DECODED
DATA:d

FIG. 15

21

DATA
REPRODUCING
SECTION

CUT-OFF FREQUENCY:$f_W$

RE-SAMPLING
FREQUENCY:
$f_V = 2f_W$

22

COMPRESSED-
SOUND-DATA
DECODING SECTION

d

231

UP-SAMPLING
CONVERTING
SECTION

$d_u$

232

ADAPTIVE
DIGITAL LOW
PASS FILTER

$d_o$

23

24

SOUND OUTPUT
PROCESSING
SECTION

UP-SAMPLING FREQUENCY:$f_u$

FIG. 16

UP-SAMPLING  FREQUENCY:$f_u$

24

BAND ADAPTIVE
TYPE OUTPUT
DATA CONVERTING
SECTION

$d_o$

241

S/H & DAC

242

LPF

243

PRE-POWER-
AMPLIFIER

5

SOUND
OUTPUT
DEVICE

CUT-OFF FREQUENCY:$f_W$

23

FIG. 17

M=0, 1, ···, (TOTAL NUMBER OF INPUT
SOUND SAMPLES)

$[b_0]_i$

$[b_1]_i$

1212

12124A'

12127

NEURAL NETWORK
DETERMINING SECTION

$\boxed{|b_1/b|}$ $[c_1]_i$ $\boxed{\sum_{i=0}^{M}[c_1]_i}$ $c_1$

$[b_2]_i$

$\boxed{|b_2/b|}$ $[c_2]_i$ 12124B' $\boxed{\sum_{i=0}^{M}[c_2]_i}$ $c_2$

$[b_3]_i$

$\boxed{|b_3/b|}$ $[c_3]_i$ 12124C' $\boxed{\sum_{i=0}^{M}[c_3]_i}$ $c_3$

k:APPROPRIATE BAND ID          k

$c_k = |b_{k-1}/b| - |b_k/b|$

$k = 1, 2, 3$

CUT-OFF FREQUENCY
AND RE-SAMPLING
FREQUENCY SETTING
SECTION

$f_V = 2f_W$

$f_W$

**FIG.18**

8

| | | | CUT-OFF FREQUENCY $f_W$ |
|---|---|---|---|
| HUMAN VOICES | → SINGLE → | PRONUNCIATION LEANING ----------→ | 8kHz |
| | | → MASSAGE TRANSMISSION -→ | 4kHz |
| | → PLURAL ----→ | MASSAGE TRANSMISSION -→ | 8kHz |
| ANIMAL SOUNDS | → HORSE, DOG, ··· ----------------→ | | 4kHz |
| | → BIRD -----------------------→ | | 8kHz |
| | → INSECT ----------------------→ | | 8kHz |
| SOUNDS OF TRANSPORTATION FACILITIES | → JET PLANE --------------------→ | | 8kHz |
| | → MOTORCAR ---------------------→ | | 4kHz |

**FIG.20**

FIG. 19

$f_V$

| 3 | 11' | 18 | | 14 |
|---|---|---|---|---|
| SOUND INPUT DEVICE | SOUND INPUT PROCESSING SECTION | BAND ADAPTIVE TYPE INPUT DATA EMPHASIZING/ CONVERTING SECTION | SOUND COMPRESSION ENCODING SECTION | DATA RECORDING SECTION |

4    13

RECORDING/TRANSMITTING MEDIUM

| 21 | 22 | 24 | 5 |
|---|---|---|---|
| DATA REPRODUCING SECTION | COMPRESSED- SOUND-DATA DECODING SECTION | SOUND OUTPUT PROCESSING SECTION | SOUND OUTPUT DEVICE |

$f_V$

## FIG.21

INPUT SAMPLING CLOCK GENERATING SECTION — 114

*11'*                                                                 18

FREQUENCY $f_a \geqq 2f_s$

| 3 | 111 | 112 | 113 | 18 |
|---|---|---|---|---|
| SOUND INPUT DEVICE | PRE-AMPLIFIER | LPF | S/H & ADC | BAND ADAPTIVE TYPE INPUT DATA EMPHASIZING/ CONVERTING SECTION |

CUT-OFF FREQUENCY: $f_s$

## FIG.22

| SOUND INPUT PROCESSING SECTION | MAJOR COMPONENT BAND DETECTING SECTION | APPROPRIATE BAND DETERMINING/ SELECTING SECTION —182 | *18* |
|---|---|---|---|

11'          181

MAJOR COMPONENT BAND ID

184          183          185          13

| BUFFER MEMORY | BAND EMPHASIZING ANTI-ALIASING FILTER | RE-SAMPLING CONVERTING SECTION | SOUND COMPRESSION ENCODING SECTION |
|---|---|---|---|

$f_V$

## FIG.23

29

| MAJOR COMPONENT BAND ID:k | CUT-OFF FREQUENCY $f_W$ | RE-SAMPLING FREQUENCY $f_V=2f_W$ | BAND EMPHASIZING FILTER |
|---|---|---|---|
| 1 | $f_S/2$ | $f_S$ | NONE |
| 2 | $f_S/2$ | $f_S$ | NONE |
| 3 | $f_S/2$ | $f_S$ | EXIST |

## FIG. 24

POWER OF SPECTRUM

BAND EMPHASIZING
ANTI-ALIASING FILTER
CHARACTERISTIC 64

FREQUENCY

$f_S/2$          $f_S$

SPECTRUM OF
INPUT SOUND 61

↓

POWER OF SPECTRUM

SPECTRUM
OBTAINED AFTER
BAND EMPHASIS 65

FREQUENCY

$f_S/2$          $f_S$

## FIG. 25

**European Patent Office**

## EUROPEAN SEARCH REPORT

Application Number

EP 99 10 1205

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,A | PATENT ABSTRACTS OF JAPAN<br>vol. 018, no. 161 (E-1526), 17 March 1994<br>& JP 05 335968 A (OKI ELECTRIC IND CO LTD), 17 December 1993<br>* abstract * | 1 | H04B14/04 |
| A | US 4 626 827 A (KITAMURA MASATSUGU ET AL)<br>2 December 1986<br>* abstract; figures 1,2 *<br>* column 1, line 56 – column 2, line 9 *<br>* column 2, line 48 – column 3, line 19 *<br>* column 6, line 16 – line 26; figures 7A,7B *<br>* column 8, line 4 – column 9, line 5; figures 11A,11B * | 1,6,10, 16 | |
| A | EP 0 508 581 A (AMERICAN TELEPHONE & TELEGRAPH) 14 October 1992<br>* abstract; figure 2 *<br>* page 2, line 5 – line 13 *<br>* page 2, line 56 – page 3, line 25 *<br>* page 4, line 5 – line 15 *<br>* page 5, line 57 – page 6, line 24; figures 3,5 * | 1,4,6, 10,13,16 | |
| A | US 5 530 750 A (AKAGIRI KENZO)<br>25 June 1996<br>* abstract; figure 4 *<br>* column 2, line 60 – column 3, line 14 *<br>* column 4, line 20 – line 38 *<br>* column 5, line 9 – line 17 *<br>* column 5, line 52 – line 63 *<br>* column 6, line 60 – column 7, line 7 *<br>* column 19, line 20 – line 25; figure 1 * | 1,10 | TECHNICAL FIELDS SEARCHED (Int.Cl.6)<br><br>H04B<br>H03M |

-/--

The present search report has been drawn up for all claims

| Place of search | Date of completion of the search | Examiner |
|---|---|---|
| THE HAGUE | 4 June 1999 | Sieben, S |

EPO FORM 1503 03.82 (P04C01)

European Patent
Office

**EUROPEAN SEARCH REPORT**

Application Number

EP 99 10 1205

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 5 414 796 A (GARDNER WILLIAM R ET AL) 9 May 1995<br>* abstract; figures 4,7A,7B *<br>* column 3, line 17 - line 33 *<br>* column 3, line 66 - column 4, line 12 *<br>* column 6, line 32 - line 48 *<br>* column 11, line 3 - line 21 *<br>* column 14, line 61 - column 15, line 30 * | 1,4,6, 10,13,16 | |
| | ----- | | |

TECHNICAL FIELDS
SEARCHED      (Int.Cl.6)

The present search report has been drawn up for all claims

| Place of search | Date of completion of the search | Examiner |
|---|---|---|
| THE HAGUE | 4 June 1999 | Sieben, S |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.          EP 99 10 1205

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-1999

| Patent document cited in search report | | Publication date | Patent family member(s) | | Publication date |
|---|---|---|---|---|---|
| US 4626827 | A | 02-12-1986 | JP | 1495636 C | 16-05-1989 |
| | | | JP | 58159033 A | 21-09-1983 |
| | | | JP | 63045138 B | 08-09-1988 |
| | | | JP | 58159215 A | 21-09-1983 |
| | | | JP | 1805363 C | 26-11-1993 |
| | | | JP | 5016101 B | 03-03-1993 |
| | | | JP | 58164007 A | 28-09-1983 |
| | | | JP | 1495639 C | 16-05-1989 |
| | | | JP | 58165442 A | 30-09-1983 |
| | | | JP | 63045140 B | 08-09-1988 |
| | | | DE | 3309467 A | 29-09-1983 |
| | | | FR | 2530897 A | 27-01-1984 |
| | | | GB | 2128049 A,B | 18-04-1984 |
| | | | GB | 2160040 A,B | 11-12-1985 |
| EP 0508581 | A | 14-10-1992 | US | 5559900 A | 24-09-1996 |
| | | | CA | 2061366 A,C | 13-09-1992 |
| | | | DE | 69219943 D | 03-07-1997 |
| | | | DE | 69219943 T | 02-01-1998 |
| | | | JP | 2045196 C | 09-04-1996 |
| | | | JP | 5122166 A | 18-05-1993 |
| | | | JP | 7079312 B | 23-08-1995 |
| US 5530750 | A | 25-06-1996 | JP | 6244738 A | 02-09-1994 |
| | | | AU | 675295 B | 30-01-1997 |
| | | | AU | 6045694 A | 14-09-1994 |
| | | | CN | 1106968 A | 16-08-1995 |
| | | | EP | 0636268 A | 01-02-1995 |
| | | | WO | 9419801 A | 01-09-1994 |
| US 5414796 | A | 09-05-1995 | US | 5657420 A | 12-08-1997 |
| | | | US | 5778338 A | 07-07-1998 |
| | | | AU | 1482597 A | 15-05-1997 |
| | | | AU | 671952 B | 19-09-1996 |
| | | | AU | 2186592 A | 12-01-1993 |
| | | | AU | 693374 B | 25-06-1998 |
| | | | AU | 6089396 A | 03-10-1996 |
| | | | BR | 9206143 A | 03-01-1995 |
| | | | CN | 1071036 A | 14-04-1993 |
| | | | CN | 1159639 A | 17-09-1997 |
| | | | CN | 1167309 A | 10-12-1997 |
| | | | EP | 0588932 A | 30-03-1994 |
| | | | FI | 935597 A | 13-12-1993 |
| | | | HU | 70719 A | 30-10-1995 |
| | | | IL | 102146 A | 31-03-1996 |
| | | | IL | 113986 A | 14-11-1996 |

EPO FORM P0459

For more details about this annex : see Official Journal of the European Patent Office, No. 12/82

## EP 0 933 889 A1

## ANNEX TO THE EUROPEAN SEARCH REPORT
## ON EUROPEAN PATENT APPLICATION NO.

EP 99 10 1205

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-1999

| Patent document cited in search report | Publication date | Patent family member(s) | | Publication date |
|---|---|---|---|---|
| US 5414796 A | | IL | 113987 A | 14-11-1996 |
| | | IL | 113988 A | 14-11-1996 |
| | | JP | 6511320 T | 15-12-1994 |
| | | MX | 9202808 A | 01-12-1992 |
| | | NO | 934544 A | 10-12-1993 |
| | | WO | 9222891 A | 23-12-1992 |
| | | ZA | 9204082 A | 26-02-1993 |

EPO FORM P0459

For more details about this annex : see Official Journal of the European Patent Office, No. 12/82